# EUROPEAN PATENT SPECIFICATION

(11) **EP 1 602 861 B1**
(45) Date of publication and mention of the grant of the patent: **23.05.2012**
(21) Application number: 04718414.8
(22) Date of filing: 08.03.2004
(51) Int. Cl.: F16H 57/04, F16H 57/02

(54) **BAFFLE PLATE AND TRANSMISSION**
PRALLBLECH FÜR GETRIEBE
TOLE-CHICANE ET TRANSMISSION

(30) Priority: 10.03.2003 JP 2003063722; 14.03.2003 JP 2003070349; 02.03.2004 JP 2004057018; 02.03.2004 JP 2004057017
(43) Date of publication of application: 07.12.2005
(73) Proprietor: Yanmar Co., Ltd., Osaka-shi, Osaka 530-0013 (JP)
(72) Inventor: MATSUFUJI, M, Yanmar Agricultural Equipment Co Ltd, Osaka-shi, Osaka 530-0013 (JP); MORIWAKI, T, Yanmar Agricultural Equipment Co Ltd., Osaka-shi, Osaka 530-0013 (JP); EGAWA, F Yanmar Agricultural Equipment Co. Ltd., Osaka-shi, Osaka 530-001 3 (JP); YOSHII, Gen, Yanmar Agricultural Equipment Co. Ltd, Osaka-shi, Osaka 530-0013 (JP)
(74) Representative: Isarpatent
(86) International application number: PCT/JP2004/002961
(87) International publication number: WO 2004/081416

(56) References cited:
- JP-A- 4 069 445
- JP-A- 2002 070 993
- JP-U- 3 096 461
- JP-U- 62 093 456
- JP-U- 63 170 659
- JP-Y2- 62 031 729

## Description

### TECHNICAL FIELD

The present invention relates to a transmission including a housing for accommodating a transmission mechanism and for interiorly storing oil, and a baffle plate to be applied to the transmission.

### BACKGROUND ART

It is conventionally known that storing operating oil, which is used for various hydraulic mechanisms, in a housing for accommodating a transmission mechanism such as a traveling system transmission mechanism operatively connected to a drive source.

According to this construction in which the housing is also used as the storage space for the operating oil, cost can be reduced and the transmission itself can be made small due to elimination or miniaturization of an additional storage tank.

However, the conventional transmission is insufficient regarding the following points.

That is, the oil stored inside the housing is used as the operating oil of various hydraulic mechanisms provided in the vehicle. Therefore, when using the housing also as the storage tank, a sufficient amount of oil must be stored inside the housing to prevent oil shortage in the hydraulic mechanism from occurring.

On the other hand, the oil stored inside the housing becomes a load on the transmission mechanism accommodated in the housing. Therefore, storing large amount of oil in the housing is not preferable in terms of transmission efficiency of the transmission mechanism.

Thus, contradicting demands exist in that it is preferable to store large amount of oil in the housing in terms of supplying operating oil to the hydraulic mechanism, but is preferable to minimize the amount of stored oil in the housing in terms of transmission efficiency of the transmission mechanism.

The conventional transmission does not sufficiently take the above points into consideration.

Further, in responding to the above demands, it is desired that assembly workability be not lowered.

Document JP 62 031 729 Y2, which constitutes the closest prior art, discloses a baffle plate applied to a transmission comprising a transmission mechanism including a rotating body and a housing for the transmission mechanism and a storage space where oil can be stored, wherein the baffle plate is installed in the housing so as to separate the storage space of the housing into a surrounding space for surrounding part of the rotating body and a main space in a liquid sealing manner, wherein the baffle plate is configured so as to move the oil in the surrounding space to the main space by a pump effect involved in the rotating motion of the rotating body.

Document JP 4 069 445 A discloses a baffle plate wherein a surrounding space and a main space are fluidly connected to each other through a groove formed at an end surface on one side in an axial line direction. Further, the baffle plate is formed with a first opening, so that oil that has been introduced through the groove from the main space into the surrounding space is returned to the main space through the first opening.

Furthermore, the baffle plate is also formed with second openings that fluidly connect the surrounding space and the main space.

The present invention, in view of the above prior art, aims to effectively prevent lowering of transmission efficiency of the transmission mechanism while storing a sufficient amount of operating oil in the housing in a transmission including a housing for accommodating the transmission mechanism and for interiorly storing the operating oil.

The present invention also aims to provide a baffle plate applicable to a transmission including a housing for accommodating the transmission mechanism and for interiorly storing the operating oil, the baffle plate effectively preventing lowering of transmission efficiency of the transmission mechanism while allowing a sufficient amount of operating oil to be stored in the housing.

The present invention also aims to provide a structure for preventing the lowering of assembly workability as much as possible, and for effectively preventing lowering of transmission efficiency of the transmission mechanism accommodated in the housing even if a sufficient amount of operating oil is stored in the transmission mechanism housing.

### DISCLOSURE OF THE INVENTION

In order to achieve the aim, the present invention provides a transmission according to independent claim 1.

According to the configuration, lowering of transmission efficiency of the transmission mechanism due to the stored oil in the housing could be effective prevented, while allowing a sufficient amount of operating oil to be stored in the housing.

Preferably, the baffle plate may include a peripheral surface along an outer peripheral surface of the rotating body so as to surround at least an area including a lowermost end portion of the outer peripheral surface of the rotating body.

The peripheral surface is formed into a circular arc shape having a central axis substantially concentric with the rotation axis of the rotating body when seen along the direction of the rotation axis of the rotating body.

More preferably, the baffle plate may include a side surface extending upward from both upper ends of the peripheral surface.

The side surface has an upper end position substantially the same as the upper end of the rotating body.

Alternatively, in an example not forming part of the invention, a communication hole for communicating the surrounding space and the main space may be provided at a portion of the peripheral surface or the side surface, the portion being positioned on a downstream side in the rotating direction from the lowermost end portion of the rotating body when seen along the direction of the rotation axis of the rotating body.

In the various configurations, in a case that the baffle plate has an attachment attached to a bearing support plate mounted to the housing, the baffle plate is configured to separate between the surrounding space and the main space in a liquid sealing manner in cooperation with the bearing support plate.

The baffle plate may further include a pair of end faces extending in a radial direction from both ends in the central axis direction of the peripheral surface so as to cover at least an area including the lowermost end portion of both ends in the direction of the rotation axis of the rotating body.

In a configuration, not forming part of the invention, the surrounding space and the main space are separated by the peripheral surface and the pair of end faces in a liquid sealing manner.

More preferably, a gap between the pair of end faces and the opposing end faces of the rotating body is 3 mm or less.

In the above various configurations, the gap in the radial direction between the peripheral surface and the outer peripheral surface of the rotating body is 3 mm or less.

The present invention further provides a transmission that includes: a transmission mechanism including a rotating body operatively connected to a drive source; a housing for accommodating the transmission mechanism and having a storage space where oil can be stored; and a baffle plate installed in the housing so as to cover a lowermost end portion of the rotating body.

The baffle plate is configured to separate the storage space of the housing into a surrounding space for surrounding at least the lowermost end portion of the rotating body and a main space other than the surrounding space in a liquid sealing manner, and move the oil in the surrounding space to the main space by a pump effect involved in a rotating motion of the rotating body.

According to the transmission, lowering of transmission efficiency of the transmission mechanism due to the stored oil in the housing could be effective prevented, while allowing a sufficient amount of operating oil to be stored in the housing.

The present invention further provides a baffle plate mounted to a housing that accommodates a transmission mechanism including a rotating shaft operatively connected to a drive source and a rotating body supported by the rotating shaft, and is configured to be capable of using an inner space as a storage spaces for oil.

The housing includes first and second bearing portions for supporting the rotating shaft, the first and second bearing portions being spaced apart in a direction of an axis line of the rotating shaft so as to arrange the rotating body in between.

The baffle plate includes a first end supported by the first bearing portion, a second end supported by the second bearing portion, and a peripheral surface extending between the first and second ends so as to surround at least the lower end of the rotating body.

At least one of the first and second ends is supported by the corresponding bearing portion in a floating-manner so as to be movable in a direction of the rotating shaft. Such a floating support is not part of the invention

According to the configuration, lowering of transmission efficiency of the transmission mechanism due to the stored oil in the housing could be effective prevented, while allowing a sufficient amount of operating oil to be stored in the housing, together with the lowering of assembly workability as much as possible.

Preferred embodiments of the invention are defined in the dependent claims 2 to 6.

Preferably, one of the first and second ends is engaged with a supporting surface provided on the corresponding bearing portion so as to be movable in a direction of the rotating shaft, and the other one of the first and second ends is concave-convex engaged with the corresponding bearing portion so as to be movable in the direction of the rotating shaft.

Alternative to this configuration, one of the first and second ends may include a convex portion that is concave-convex engaged with a concave portion provided in the corresponding bearing portion, and the other one of the first and second ends may include a concave portion that is concave-convex engaged with the convex portion formed in the corresponding bearing portion.

In the alternative configuration, for instance, the convex portion provided on the bearing portion is formed by a rod-shaped member including a screw portion that is screwed into a threaded hole formed in the bearing portion.

In the above various configurations, the end that is supported by the corresponding bearing portion in a floating-manner is preferably supported in a state of being against a biasing force of an elastic body having a biasing force along the direction of the axis line of the rotating shaft.

The present invention further provides a transmission including a traveling system transmission mechanism that transmits the driving power from a drive source to driving axles, and a housing that accommodates the traveling system transmission mechanism and is capable of storing oil therein.

The housing includes a traveling system chamber that accommodates the traveling system transmission mechanism and a reservoir chamber that is separated from the traveling system chamber.

The reservoir chamber is so configured that a part of the stored oil in the traveling system chamber is moved from the traveling system chamber to the reservoir chamber by utilizing the rotational movement of the traveling system transmission mechanism, and the oil that has been moved to the reservoir chamber is retained temporarily within the reservoir chamber.

According to the configuration, lowering of transmission efficiency of the transmission mechanism due to the stored oil in the housing could be effective prevented, while allowing a sufficient amount of operating oil to be stored in the housing.

Preferably, an orifice may be provided in a partition wall that separates between the traveling system chamber and the reservoir chamber.

In one embodiment, the transmission may include a PTO system transmission mechanism for outputting the driving power from the drive source to outward of the housing.

The PTO system transmission mechanism includes a PTO transmission shaft operatively connected to the drive source, and a PTO transmission unit operatively connected to the PTO transmission shaft.

The housing includes a PTO system chamber, and is so configured to the PTO system chamber is utilized as the reservoir chamber.

For instance, the reservoir chamber may be formed at an upper area in the traveling system chamber so as to temporarily receive the oil that is stirred up and moved by the rotating motion of the traveling system transmission mechanism.

The present invention further provides a transmission including a traveling system transmission mechanism that transmits the driving power from a drive source to driving axles, a PTO system transmission mechanism for outputting the driving power from the drive source outward, and a housing that accommodates the traveling system transmission mechanism and the PTO system transmission mechanism and that is capable of storing oil therein.

The PTO system transmission mechanism includes a PTO transmission shaft operatively connected to the drive source, a PTO output shaft for outputting the power outward, and a PTO transmission unit arranged between the PTO transmission shaft and the PTO output shaft.

The housing has a partition wall dividing an inner space into a traveling system chamber where the traveling system transmission mechanism is accommodated and the PTO transmission shaft is passed through and a PTO system chamber where the PTO system transmission mechanism is accommodated.

The transmission is so configured that a part of the stored oil in the traveling system chamber is moved from the traveling system chamber to the PTO system chamber by utilizing the rotational movement of transmission unit in the traveling system transmission mechanism.

The partition wall has an orifice for gradually returning the oil that has been moved to the PTO system chamber into the traveling system chamber.

In one embodiment, the traveling system transmission mechanism may include, as a part of the transmission unit, a differential gear device that has a ring gear rotating about a rotational axis along a vehicle width direction.

The partition wall is extended along the vehicle width direction so that the traveling system chamber and the PTO system chamber are positioned in series from one side to the other side in a vehicle longitudinal direction.

The transmission according to the one embodiment is configured so that a part of the stored oil is moved into the PTO system chamber by the rotational movement of the ring gear.

For instance, the partition wall is configured so that the oil stirred up by the ring gear is moved from the traveling system chamber into the PTO system chamber over the partition wall.

In place of, or in addition to the configuration, the partition wall may have a suction port for allowing the oil to flow from the traveling system chamber into the PTO system chamber by the pump effect of the ring gear. The suction port may be formed so as to be along a circumferential surface of the ring gear.

In a case where the traveling system transmission mechanism includes, as a part of the transmission unit, a gear train having gears engaged to each other, the transmission may be configured so that the stored oil is moved from the traveling system transmission mechanism to the PTO system transmission mechanism by the pump effect of the gear train.

The present invention still further provides a transmission including a traveling system transmission mechanism that transmits the driving power from a drive source to driving axles, and a housing that accommodates the traveling system transmission mechanism and that is capable of storing oil therein.

The housing has a traveling system chamber that accommodates the traveling system transmission mechanism, and a reservoir chamber that is separated from the traveling system chamber in a liquid-tight manner by a partition wall.

The reservoir chamber is configured so that a part of stored oil is moved from the traveling system chamber into the reservoir chamber by the rotational movement of the traveling system transmission mechanism.

In the partition wall, an open/close device is provided.

The open/close device is configured so as to maintain the separated state where the traveling system chamber and the reservoir chamber are separated each other at a time when the traveling system transmission mechanism is rotating, and to communicate the traveling system chamber and the reservoir chamber at a time when the traveling system transmission mechanism is stopped.

According to the configuration, even if a sufficient amount of oil is stored in the housing, the transmission efficiency of the traveling system transmission mechanism can be effectively prevented from lowering.

Furthermore, in the transmission, when the traveling system transmission mechanism is stopped, the oil within the reservoir chamber could be returned to the traveling system chamber quickly. Therefore, even if stored oil is extracted at an arbitrary position of the traveling system chamber, oil shortage phenomenon can be effectively prevented.

In one embodiment, the open/close device includes an opening formed in the partition wall to communicate the traveling system chamber and the reservoir chamber, an open/close member that takes a closed position for closing the opening and an opened position for opening the opening, a biasing member for biasing the open/close member toward the opened position, and a pushing mechanism for pushing the open/close member toward the closed position against the biasing force of the biasing member.

The pushing mechanism is configured so as to push the open/close member 62 using an oil pressure of a hydraulic circuit in the transmission.

Preferably, the pushing mechanism may have a pressure oil supply line for communicating the hydraulic circuit and the open/close member so that the open/close member is pushed to the closed position by the pressure oil of the hydraulic circuit, and a switching valve inserted in the pressure oil supply line.

The switching valve is configured to communicate and block the pressure oil supply line when the traveling system transmission mechanism is rotated and stopped, respectively.

In a case where the transmission system transmission mechanism includes a differential gear device that has a ring gear rotating about a rotational axis along a vehicle width direction, the partition wall is so configured to extend along the vehicle width direction so that the traveling system chamber and the PTO system chamber are positioned in series from one side to the other side in a vehicle longitudinal direction.

In the configuration, a part of the stored oil in the traveling system chamber is moved into the PTO system chamber by a stirring function involved in the rotational movement of the ring gear.

For instance, the partition wall is configured so that the oil stirred up by the ring gear is moved from the traveling system chamber into the PTO system chamber.

In the other embodiment, the open/close member is pushed toward the closed position against the biasing force of the biasing member.

### BRIEF DESCRIPTION OF THE DRAWINGS

Fig. 1 is a transmission schematic view of a transmission according to one aspect of the present invention.
Fig. 2 is an enlarged schematic view of part II of Fig. 1.
Fig. 3 is a perspective view of a baffle plate that is applied to the transmission shown in Fig. 1.
Fig. 4 is a schematic cross-sectional view taken along line IV-IV of Fig. 2.
Fig. 5 is a schematic cross-sectional view taken along line V-V of Fig. 2.
Fig. 6 is a schematic cross-sectional view taken along line VI-VI of Fig. 2.
Fig. 7 is a schematic cross-sectional view of a baffle plate modified from the baffle plate shown in Figs. 1 to 6, and is corresponding to Fig. 4.
Fig. 8 is a perspective view of a baffle plate of another embodiment.
Figs. 9(a) and 9(b) are a schematic cross-sectional side view and a schematic cross-sectional front view of a baffle plate of still another embodiment, respectively.
Fig. 10 is a vertical schematic view of baffle plate of still another embodiment.
Fig. 11 is a transmission schematic view of a transmission to which a baffle plate of still another embodiment according to the one aspect of the present invention.
Fig. 12(a) is an enlarged schematic view of part XII of Fig. 11.
Fig. 12(b) is an enlarged view of part XIIb of Fig. 12(a).
Fig. 13(a) is a schematic cross-sectional side view of a baffle plate of still another embodiment.
Fig. 13(b) is an enlarged schematic view of part XIIIb of Fig. 13(a).
Fig. 14 is a schematic cross-sectional front view of the baffle plate shown in Fig. 13.
Fig. 15 is a transmission schematic view of a transmission of another embodiment according to the present invention.
Fig. 16 is an enlarged schematic view of part XVI of Fig. 15.
Fig. 17 is an enlarged schematic view of part XVI of Fig. 15, and shows a modified example of an orifice.
Fig. 18 is an enlarged schematic view of part XVI of Fig. 15, and shows modified example of an oil transfer means.
Fig. 19 is a partial vertical schematic view of a transmission of another embodiment according to the present invention, and is a schematic cross-sectional view taken along the cross section corresponding to line XIX-XIX of Fig. 15.
Fig. 20 is a partial vertical schematic view of a transmission of still another embodiment of the present invention.
Fig. 21 is a transmission schematic view of a transmission of another embodiment according to the present invention.
Fig. 22(a) is an enlarged schematic view of part XXII of Fig. 21, and shows a state where an open/close device is in a closed position.
Fig. 22(b) is an enlarged schematic view of part XXII of Fig. 21, and shows a state where the open/close device is in an opened position.
Fig. 23 is a hydraulic circuit diagram of the transmission shown in Fig. 21.
Fig. 24(a) is a partial vertical schematic view of a transmission of still another embodiment of the present invention, and shows a state where an open/close device is in a closed position.
Fig. 24(b) is a partial vertical schematic view of the transmission of still another embodiment of the present invention, and shows a state where the open/close device is in an opened position.

### BEST MODE FOR CARRYING OUT THE INVENTION

### Embodiment 1

A preferred embodiment of a transmission according to the present invention will now be described with reference to the accompanying drawings.

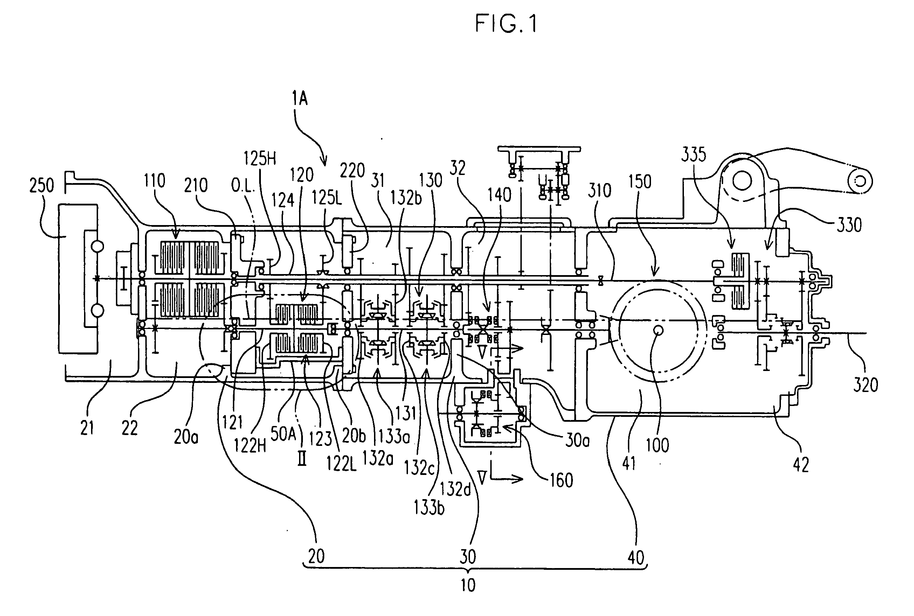

Fig. 1 is a transmission schematic view of a transmission 1A according to this embodiment.

As shown in Fig. 1, the transmission 1A includes a transmission mechanism including a rotating body operatively connected to a drive source, and a housing 10 that accommodates the transmission mechanism and is capable of interiorly storing oil therein.

More specifically, the transmission 1A includes, for the transmission mechanism, a traveling system transmission mechanism for transmitting the driving power from the drive source to driving axles 100, and a PTO system transmission mechanism for outputting the driving power from the drive source outward.

The traveling system transmission mechanism includes a forward-to-rearward switching hydraulic mechanism 110, a speed change hydraulic mechanism 120 such as a HI/LO, a mechanical main speed change mechanism 130, a mechanical sub-speed change mechanism 140, and a differential gear mechanism 150.

In this embodiment, the traveling system transmission mechanism further includes a four-wheel driving power extracting hydraulic mechanism 160.

The four-wheel driving power extracting hydraulic mechanism 160 is used to drive, in addition to the driving wheel 100 (rear wheel in the figure) that is constantly being driven, other wheels (not shown), and is preferably selectively annexed to the housing 10.

The housing 10 is able to store the oil in at least a part of the internal space.

In this embodiment, the housing 10 includes a front housing 20, a middle housing 30 and a rear housing 40 connected in series along a longitudinal direction of the vehicle.

The front housing 20, the middle housing 30 and the rear housing 40 are connected to each other in a freely oil flowing manner. That is, each of the housings has an opening provided on the end facing one another to allow the oil to freely flow through the opening.

More specifically, the front housing 20 has a drying chamber 21 for accommodating a flywheel 250 operatively connected to the drive source, and a first oil chamber 22, positioned on the downstream side in the transmission direction of the drying chamber 21, for accommodating the forward-to-rearward switching hydraulic mechanism 110 and the speed change hydraulic mechanism 120.

The middle housing 30 has a second oil chamber 31 for accommodating the main speed change mechanism, and a third oil chamber 32 for accommodating the sub-speed change mechanism.

It is to be noted that the four-wheel driving power extracting hydraulic mechanism 160 is removably attached to the middle housing 30.

The rear housing 40 includes a fourth oil chamber 41 for accommodating the differential gear mechanism 150, and a PTO system chamber 42 for accommodating the PTO transmission unit 330 of the PTO system transmission mechanism to be described later.

In this embodiment, of the internal spaces of the housing 10, the space defined by the first oil chamber 22, the second oil chamber 31, the third oil chamber 32, the fourth oil chamber 41 and the PTO system chamber 42 is the storage space where operating oil can be stored.

The PTO system transmission mechanism includes a PTO transmission shaft 310 operatively connected to the drive source, a PTO output shaft 320 for outputting the power outward, and a PTO transmission unit 330 arranged between the PTO transmission shaft 310 and the PTO output shaft 320.

The PTO transmission shaft 310 has a first end operatively connected to the drive source in the front housing 20, and a second end passing through the front housing 20 and the middle housing 30 and reaching the PTO system chamber 42 of the rear housing 40.

In this embodiment, a part of the transmission shaft in the traveling system transmission mechanism is made into a hollow shaft, and thus the transmission itself is made small by inserting the PTO transmission shaft 310 through the hollow shaft.

The PTO output shaft 320 is supported by the housing 10 so that a first end extends inside the PTO system chamber 42 and a second end extends outward from the housing 10.

The PTO transmission unit 330 operatively connects the PTO transmission shaft 310 and the PTO output shaft 320 in the PTO system chamber 42.

The PTO transmission unit 330 may preferably include a PTO clutch 335 for turning ON/OFF the power transmission from the PTO transmission shaft 310 to the PTO output shaft 320.

More preferably, the PTO transmission unit 330 may include a PTO brake (not shown) for operatively applying the braking force to the PTO output shaft 320 interlockingly with the OFF operation of the PTO clutch 335.

In addition to the thus configuration, the transmission 1A according to this embodiment further includes a baffle plate 50A arranged so as to cover at least the lowermost end portion of the rotating body, positioned below the oil level O.L. in the storage space, of the rotating bodies in the transmission mechanism.

As shown in Fig. 1, in this embodiment, the speed change hydraulic mechanism 120, the mechanical main speed change mechanism 130, the mechanical sub-speed change mechanism 140 and the four-wheel driving power extracting hydraulic mechanism 160 are arranged at the lower area in the housing 10.

The baffle plate 50A is configured so as to cover the region including the lowermost end portion of the speed change hydraulic mechanism 120.

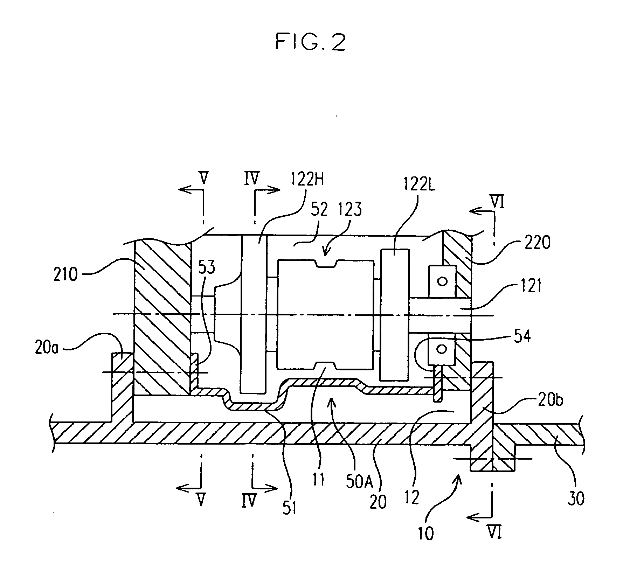

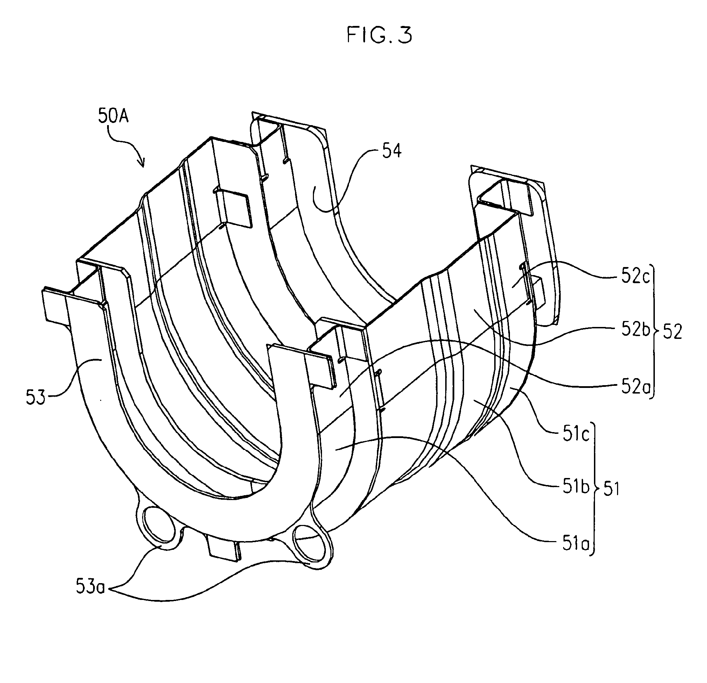

Fig. 2 is an enlarged schematic view of part II of Fig. 1. Fig. 3 shows a perspective view of the baffle plate 50A.

As shown in Fig. 3, the baffle plate 50A is formed into a U-shape so as to cover the lowermost end portion of the corresponding rotating body, and is opened upward when seen along the direction of the rotation axis of the corresponding rotating body (hydraulic speed change mechanism 120 in the embodiment shown in the figure) to isolate the rotating body from the stored oil.

More specifically, as shown in Fig. 1 and Fig. 2, the speed change hydraulic mechanism 120 includes a driving shaft 121 operatively connected to the drive source, a high-speed driving side gear 122H and a low-speed driving side gear 122L supported by the driving shaft 121 in a relatively rotatable manner, a HI/LO clutch 123 for selectively cooperatively connecting the driving shaft 121 to one of the gears 122H, 122L, a driven shaft 124 arranged parallel to the driving shaft 121, and a high-speed driven side gear 125H and a low-speed driven side gear 125L supported by the driven shaft 124 in a relatively non-rotatable manner so as to mesh with the high-speed driving side gear 122H and the low-speed driving side gear 122L, respectively.

Each constituting member of the speed change hydraulic mechanism 120 forms a rotating body that rotates about the rotation axis thereof.

The baffle plate 50A includes a peripheral surface 51 that covers the lowermost end portion of the rotating body (high-speed driving side gear 122H, HI/LO clutch 123 and driven side gear 122L in the embodiment shown in the figure), positioned at the lower area in the housing 10, of the various rotating bodies in the speed change hydraulic mechanism 120.

In this embodiment, the peripheral surface 51 integrally includes first to third peripheral surface portions 51a, 51b, 51c each corresponding to the high-speed driving side gear 122H, the HI/LO clutch 123 and the low-speed driving side gear 122L.

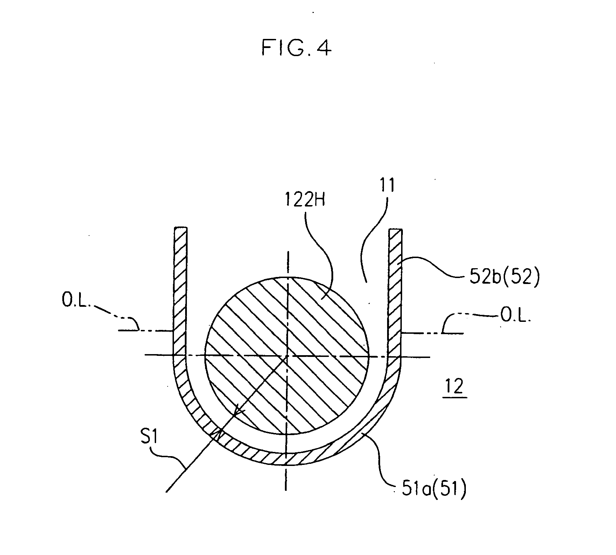

Fig. 4 shows a schematic cross-sectional view taken along line IV-IV of Fig. 2.

As shown in Fig. 3 and Fig. 4, the first peripheral surface portion 51a surrounds the area including at least the lowermost end portion of the outer peripheral surface of the high-speed driving side gear 122H, and is formed into a circular arc shape having a central axis substantially concentric with the rotation axis of the high-speed driving side gear 122H when seen along the direction of the rotation axis of the high-speed driving side gear 122H.

Similarly, the second peripheral surface portion 51b and the third peripheral surface portion 51c are respectively formed into circular arc shapes corresponding to the HI/LO clutch 123 and the low-speed driving side gear 122L.

That is, the first peripheral surface portion 51a is formed such that a first radial direction gap S1 between the first peripheral surface portion 51a and the outer peripheral surface of the high-speed driving side gear 122H is substantially the same throughout the entire region in the circumferential direction of the first peripheral surface portion 51a (see Fig. 4).

Similarly, the second peripheral surface portion 51b and the third peripheral surface portion 51c are formed such that second and third radial direction gaps with the outer peripheral surfaces of the corresponding HI/LO clutch 123 and the low-speed driving side gear 122L are each substantially the same throughout the entire regions in the respective circumferential direction of the second and third peripheral surface portions 51b, 51c.

By providing the thus configured peripheral surface 51, the oil present existed between the peripheral surface 51 and the outer peripheral surface of the corresponding rotating body is subjected to a pumping action involved in the rotating motion of the rotating body.

The first to third radial direction gaps are appropriately set as long as the pump effect induced by the rotating body which it surrounds is obtained, and is preferably 3 mm or less, and more preferably 2 mm or less.

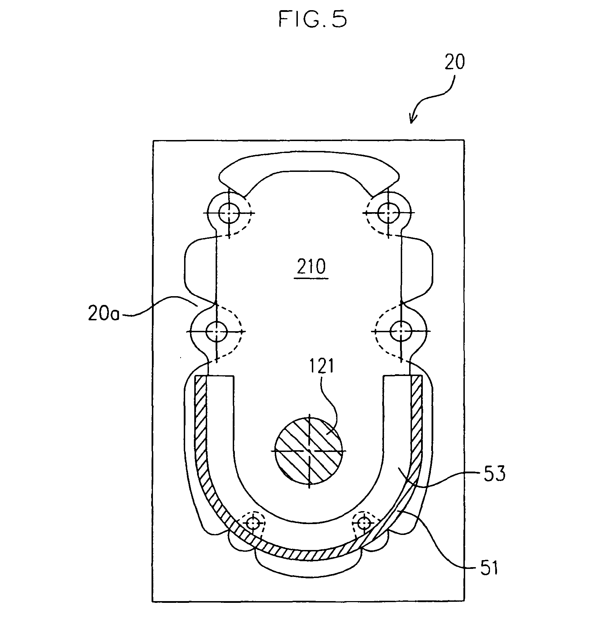

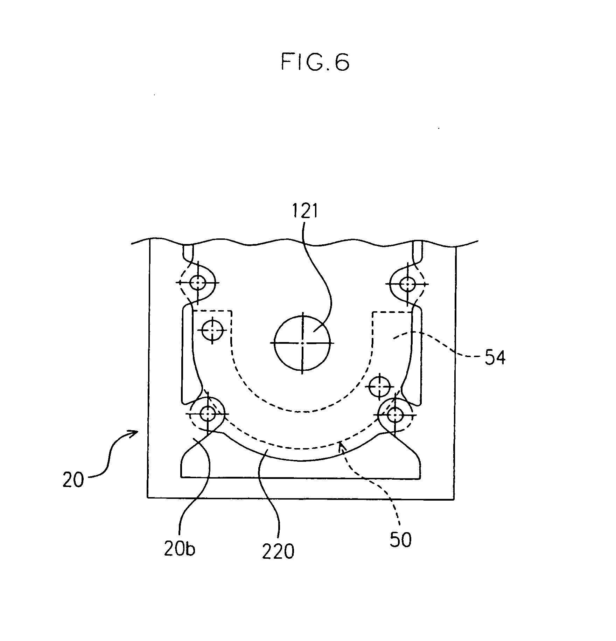

Fig. 5 and Fig. 6 each shows a schematic cross-sectional view taken along line V-V and line VI-VI of Fig. 2.

As shown in Fig. 2 and Fig. 3 to Fig. 5, the baffle plate 50A includes a pair of first and second end faces 53, 54 each extending inward in the radial direction from both ends in the direction of the central axis of the peripheral surface 50A.

The pair of first and second end faces 53, 54 act as attachments of the baffle plate 50A.

The method of attaching the baffle plate 50A will now be described.

The transmission 1A has first and second bearing support plates 210, 220 for supporting the transmission shaft in the transmission mechanism.

The first bearing support plate 210 is removably attached to a first flange 20a provided in the front housing 20, the first flange 20a extending inward in the radial direction from the inner peripheral surface of the front housing 20.

On the other hand, the second bearing support plate 220 is removably attached to the second flange 20b provided in the front housing 20, the second flange 20b extending inward in the radial direction from the inner peripheral surface of the downstream side end in the transmission direction of the front housing 20.

The first end face 53 and the second end face 54 of the baffle plate 50A are connected to the first and second bearing support plates 210, 220, respectively in a liquid sealing manner.

That is, both end faces in the direction of the central axis of the baffle plate 50A are closed in a liquid sealing manner by the first and second bearing support plates 210, 220, respectively.

Preferably, an extension 53a extending outward in the radial direction is provided at the first end face 53 so as to allow the first end face 53, the first bearing support plate 210 and the first flange 20a to be concurrently tighten by way of an attachment hole formed at the extension 53a.

The second end face 54 may be screwed to the second bearing support plate 220.

Therefore, in the transmission 1A according to this embodiment, the corresponding rotating body in the speed change hydraulic mechanism is separated from the other space in the storage space in a liquid sealing manner by the baffle plate 50A, the first bearing support plate 210, and the second bearing support plate 220.

That is, the baffle plate 50A separates the storage space within the housing 10 into the surrounding space 11 that surrounds the corresponding rotating body and the main space 12 other than the surrounding space 11 in cooperation with the first and second bearing support plates 210, 220.

The thus transmission 1A has the following advantages.

That is, the corresponding rotating body (high-speed driving side gear 122H, the HI/LO clutch 123 and the low-speed driving side gear 122L in this embodiment) is separated from the main space 12 in a liquid sealing manner. Therefore, the oil stored in the main space 12 does not become a rotating resistance to the rotating body.

Further, the oil within the surrounding space 11 is stirred out to the main space 12 by the pump effect involved in the rotating motion of the rotating body.

Therefore, the lowering of transmission efficiency of the rotating body caused by the stored oil can be effectively prevented while storing a sufficient amount of oil in the main space 12 so as to prevent oil shortage for the hydraulic mechanism.

Further, in this embodiment, since the baffle plate 50A is supported by the first and second bearing support plates 210, 220, the first and second bearing support plates 210, 220, the speed change hydraulic mechanism 120 and the baffle plate 50A could be assembled outside the housing, and the assembly could then be arranged inside the housing 10.

Therefore, the assembling workability of the baffle plate can be facilitated.

The baffle plate 50A preferably includes a side surface 52 extending upward from both upper ends of the peripheral surface 51 (see Fig. 3 and Fig. 4). The side surface 52 has the upper end position substantially the same as the upper end position of the rotating body which it surrounds.

By providing the side surface 52, the flow of stored oil from the main space 12 to the surrounding space 11 can be effectively prevented without inhibiting the oil from being stirred up from the surrounding space 11 to the main space 12 by the pump effect of the rotating body.

In this embodiment, the side surface 52 integrally includes first to third side surface portions 52a to 52c each corresponding to the high-speed driving side gear 122H, the HI/LO clutch 123, and the low-speed driving side gear 122L.

The upper end of the first side surface portion 52a has the substantially same position as the upper end of the high-speed driving side gear 122H.

Similarly, the upper ends of the second and third side surface portions 52b, 52c have the substantially same positions as the upper ends of the HI/LO clutch 123 and the low-speed driving side gear 122L, respectively.

In this embodiment, the surrounding space 11 is defined by the baffle plate 50A, and the first and second bearing support plates in cooperation with the baffle plate 50A, but in place of the configuration, the surrounding space 11 may be defined only by the baffle plate 50A.

That is, the first end face 53 and the second end face 53 each may be configured so as to close the opening on a first end side and the opening on a second end side in the direction of the central axis of the peripheral surface 51.

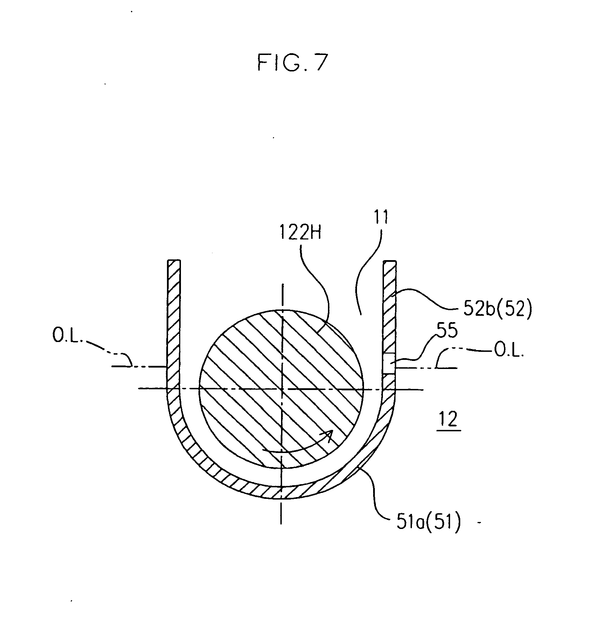

In this embodiment, the side face 52 is configured so that the upper end position is substantially the same as the upper end position of rotating body which it surrounds, but in place of the configuration, the side face 52 may be extended to above the upper end position of the rotating body which it surrounds (see Fig. 7).

In the modified configuration, a communicating hole 55 may be provided at the peripheral face 51 or the side face 52 on the downstream side in the rotating direction of the rotating body with the lowermost end portion of the peripheral surface portion 51 as the reference, so that oil is moved from the surrounding space 11 to the main space 12 through the communicating hole 55.

Further, in this embodiment, the baffle plate 50A is connected to the first and second bearing support plates 50A by way of the end faces 53, 54, but the baffle plate 50A may of course be connected to the first and second bearing support plates 210, 220 by using another various methods.

For instance, an attachment may be provided on the peripheral surface 51, and the thus baffle plate 50A may be attached to the bearing support plate by way of the attachment.

### Embodiment 2

Another embodiment of the transmission according to the present invention will now be explained with reference to the accompanying drawings.

In Embodiment 1, a case in which the transmission 1A includes the baffle plate 50A configured so as to surround the speed change hydraulic mechanism 120 is described by way of an example, but a baffle plate configured so as to surround another rotating bodies in the transmission mechanism may of course be installed in place of or in addition to the baffle plate 50A.

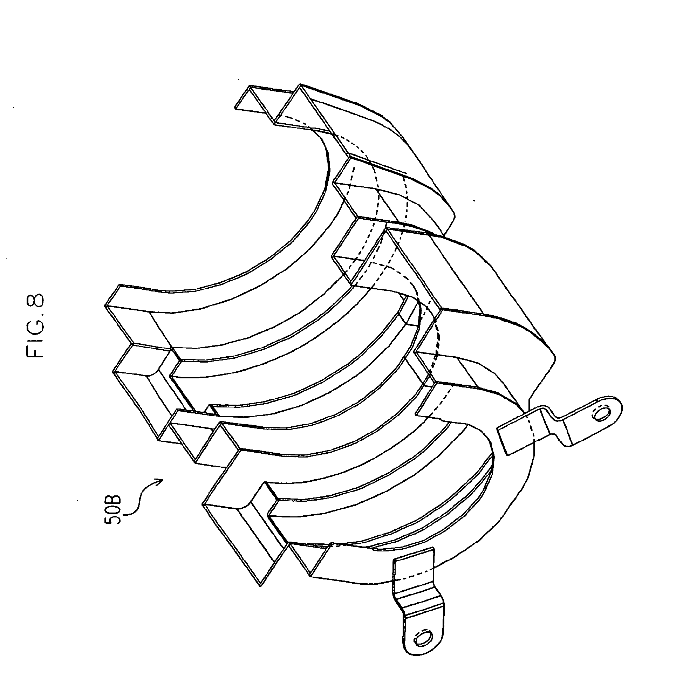

Fig. 8 shows a perspective view of a baffle plate 50B.

The baffle plate 50B is substantially the same as the baffle plate 50 of Embodiment 1 except for the fact of being configured so as to surround the entire main speed change mechanism 130. It is to be noted that the baffle plate 50B is connected to the second bearing support plate 220 and the inner wall 30a of the middle housing 30.

In the thus configuration, the main speed change mechanism 130, the baffle plate 50B and the second bearing support plate 220 are assembled outside the housing, and the assembly is then arranged inside the middle housing 30.

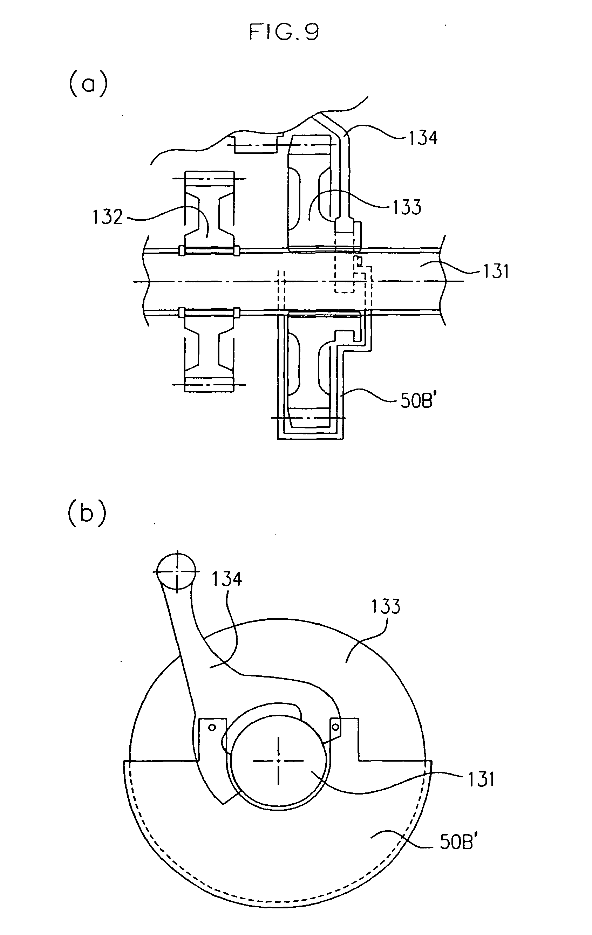

Figs. 9(a) and 9(b) show a schematic vertical side view and a schematic vertical front view of a baffle plate 50B'.

The baffle plate 50B' is configured so as to surround the sliding gear in the main speed change mechanism 130.

More specifically, the main speed change mechanism 130 includes a driven shaft 131, a plurality of driven fixed gears operatively connected to the drive source, the plurality of driven fixed gears supported by the driven shaft in a relatively rotatable manner (driven fixed gears 132a to 132d in the embodiment shown in Fig. 1), a sliding gear (sliding gears 133a to 133d in the embodiment shown in Fig. 1) supported by the driven shaft 131 in a freely slidable and a relatively non-rotatable manner so as to mesh with any one of the plurality of driven fixed gears, and a shift fork 134 (see Fig. 9) for operating the sliding gear.

The baffle plate 50B' is connected to the shift fork 134 so as to surround the corresponding sliding gear 133.

As described above, by connecting the baffle plate 50B' to the shift fork 134 for operating the sliding gear 133, the gap between the baffle plate 50B' and the sliding gear 133 to be sled is brought as close as possible, and the pump effect induced by the sliding gear 133 can be efficiently obtained.

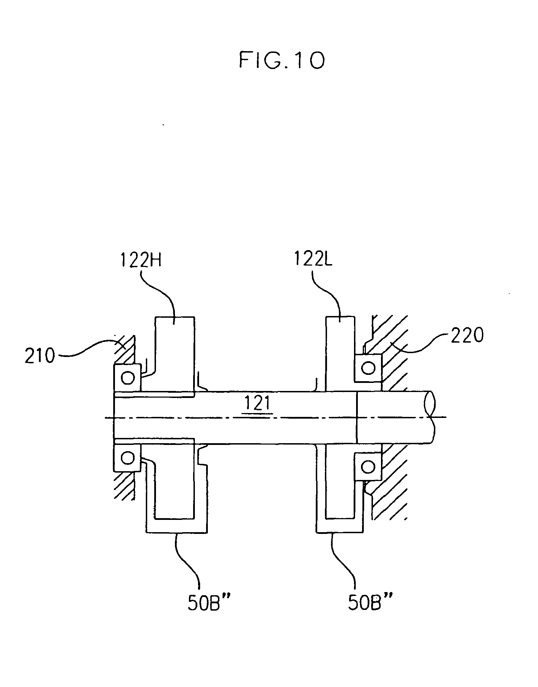

Further, Fig. 10 shows a vertical schematic view of baffle plates 50B".

Each of the baffle plate 50B" is configured so as to surround the high-speed driving side gear 122H and the low-speed driving side gear 122L in the speed change hydraulic mechanism 120 individually.

The baffle plate 50B" can be, for example, connected to the first bearing support plate 210 or the second bearing support plate 220.

### Embodiment 3

A preferred embodiment of the baffle plate according to the present invention will now be described with reference to the accompanying drawings.

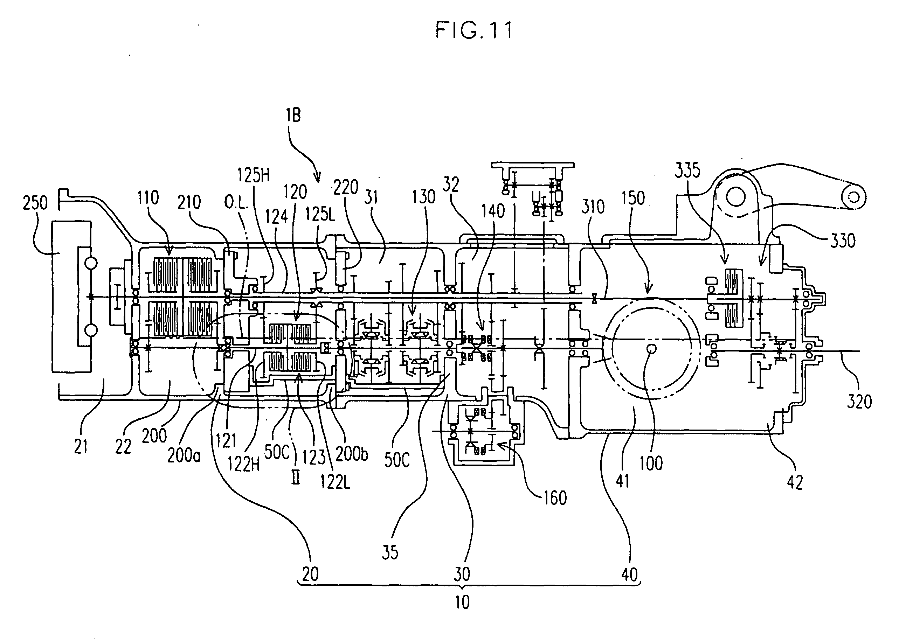

Fig. 11 is a transmission schematic view of a transmission 1B to which a baffle plate 50C according to this embodiment is applied.

As shown in Fig. 11, the transmission 1B includes a transmission mechanism including a rotating body operatively connected to a drive source, and a transmission mechanism housing 10 which accommodates the transmission mechanism and is capable of being storing oil therein.

More specifically, the transmission 1B includes, for the transmission mechanism, a traveling system transmission mechanism for transmitting the driving power from the drive source to driving axles 100, and a PTO system transmission mechanism for outputting the driving power from the drive source outward.

The traveling system transmission mechanism includes a forward-to-rearward switching hydraulic mechanism 110, a speed change hydraulic mechanism 120 such as a HI/LO, a mechanical main speed change mechanism 130, a mechanical sub-speed change mechanism 140, and a differential gear mechanism 150.

In this embodiment, the traveling system transmission mechanism further includes a four-wheel driving power extracting hydraulic mechanism 160.

The four-wheel driving power extracting hydraulic mechanism 160 is used to drive, in addition to the driving wheel 100 (rear wheel in the figure) that is constantly being driven, other wheels (not shown), and is preferably selectively annexed to the housing 10.

The housing 10 is able to store the oil in at least a part of the internal space.

In this embodiment, the housing 10 includes a front housing 20, a middle housing 30 and a rear housing 40 connected in series along a longitudinal direction of the vehicle.

The front housing 20, the middle housing 30 and the rear housing 40 are connected to each other in a freely oil flowing manner. That is, each of the housings has an opening provided on the end facing one another to allow the oil to freely flow through the opening.

More specifically, the front housing 20 has a drying chamber 21 for accommodating a flywheel 250 operatively connected to the drive source, and a first oil chamber 22, positioned on the downstream side in the transmission direction of the drying chamber 21, for accommodating the forward-to-rearward switching hydraulic mechanism 110 and the speed change hydraulic mechanism 120.

The middle housing 30 has a second oil chamber 31 for accommodating the main speed change mechanism, and a third oil chamber 32 for accommodating the sub-speed change mechanism.

It is to be noted that the four-wheel driving power extracting hydraulic mechanism 160 is removably attached to the middle housing 30.

The rear housing 40 includes a fourth oil chamber 41 for accommodating the differential gear mechanism 150, and a PTO system chamber 42 for accommodating the PTO transmission unit 330 of the PTO system transmission mechanism to be described later.

In this embodiment, of the internal spaces of the housing 10, the space defined by the first oil chamber 22, the second oil chamber 31, the third oil chamber 32, the fourth oil chamber 41 and the PTO system chamber 42 is the storage space where operating oil can be stored.

The PTO system transmission mechanism includes a PTO transmission shaft 310 operatively connected to the drive source, a PTO output shaft 320 for outputting the power outward, and a PTO transmission unit 330 arranged between the PTO transmission shaft 310 and the PTO output shaft 320.

The PTO transmission shaft 310 has a first end operatively connected to the drive source in the front housing 20, and a second end passing through the front housing 20 and the middle housing 30 and then reaching the PTO system chamber 42 of the rear housing 40.

In this embodiment, a part of the transmission shaft in the traveling system transmission mechanism is made into a hollow shaft, and thus the transmission itself is made small by inserting the PTO transmission shaft 310 through the hollow shaft.

The PTO output shaft 320 is supported by the housing 10 so that a first end extends inside the PTO system chamber 42 and a second end extends outward from the housing 10.

The PTO transmission unit 330 operatively connects the PTO transmission shaft 310 and the PTO output shaft 320 in the PTO system chamber 42.

The PTO transmission unit 330 may preferably include a PTO clutch 335 for turning ON/OFF the power transmission from the PTO transmission shaft 310 to the PTO output shaft 320.

More preferably, the PTO transmission unit 330 may include a PTO brake (not shown) for operatively applying the braking force to the PTO output shaft 320 in cooperation with the OFF operation of the PTO clutch 335.

In addition to the above configuration, the transmission 1B according to this embodiment further includes a baffle plate 50C arranged so as to cover at least the lowermost end portion of the rotating body, positioned below the oil level O.L. in the storage space, of the rotating bodies in the transmission mechanism.

As shown in Fig. 11, in this embodiment, the speed change hydraulic mechanism 120, the mechanical main speed change mechanism 130, the mechanical sub-speed change mechanism 140 and the four-wheel driving power extracting hydraulic mechanism 160 are arranged at the lower area in the housing 10.

The baffle plate 50C is mounted to the housing 10 so as to cover the region including the lowermost end portion of the speed change hydraulic mechanism 120.

That is, the baffle plate 50C is formed into a U-shape when seen along the direction of the rotation axis of the corresponding rotating body (hydraulic speed change mechanism 120 in the embodiment shown in the figure) so as to cover the lowermost end portion of the rotating body and be opened upward to isolate the rotating body from the stored oil.

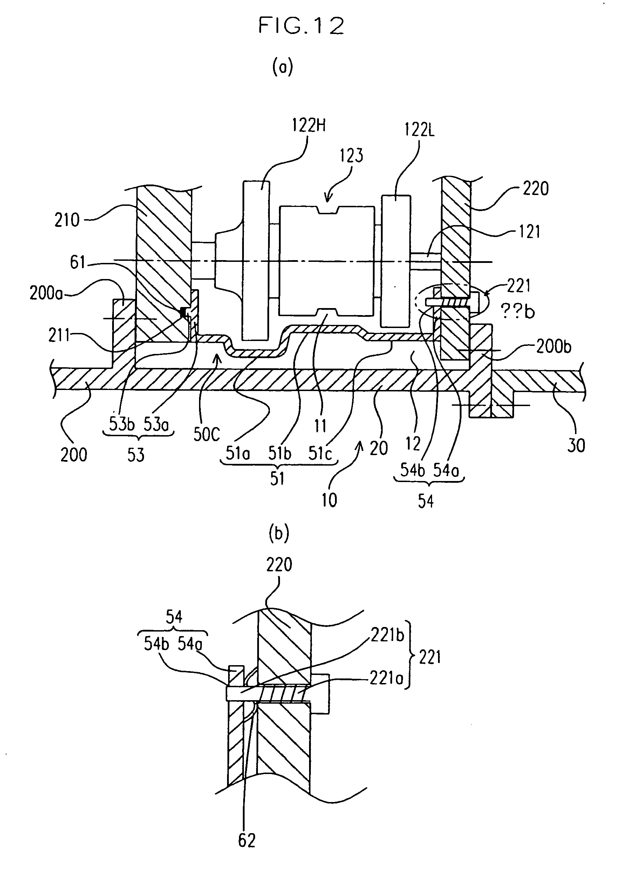

Fig. 12(a) shows an enlarged schematic view of part XII of Fig. 11. Fig. 12(b) shows an enlarged view of part XIIb of Fig. 12(a).

More specifically, as shown in Fig. 11 and Fig. 12, the speed change hydraulic mechanism 120 includes a driving shaft 121 operatively connected to the drive source, and a rotating body supported by the driving shaft.

In this embodiment, the rotating body includes a high-speed driving side gear 122H and a low-speed driving side gear 122L supported by the driving shaft 121 in a relatively rotatable manner, a HI/LO clutch 123 for selectively interlockingly connecting the driving shaft 121 to one of the gears 122H, 122L, a driven shaft 124 arranged parallel to the driving shaft 121, and a high-speed driven side gear 125H and a low-speed driven side gear 125L supported by the driven shaft 124 in a relatively non-rotatable manner so as to mesh with the high-speed driving side gear 122H and the low-speed driving side gear 122L, respectively.

The front housing 20 for accommodating the speed change hydraulic mechanism 120 has first and second bearing portions for supporting the driving shaft 121 directly or indirectly, the first and second bearing portions being spaced apart in the axis line direction of the driving shaft 121 so as to arrange the rotating body in between.

In this embodiment, the front housing includes a hollow housing main body 200, and first and second bearing support plates 210, 220 removably connected to the housing main body 200, the first and second bearing support plates 210, 220 each configuring the first and second bearing portions.

In this embodiment, the first and second bearing support plates 210, 220 are each connected to the first flange 200a and the second flange 200b integrally formed with the housing main body 200.

The baffle plate 50C includes a first end 53 supported by the first bearing portion 210, a second end 54 supported by the second bearing portion 220, and a peripheral surface 51 extending between the first end 53 and the second end 54 so as to surround at least the lower end portion of the rotating body, so that the storage space in the housing 10 is separated into the surrounding space 11 surrounded by the baffle plate 50C and the main space 12 other than the surrounding space.

The peripheral surface 51 is configured so as to cover the lowermost end portion of the rotating body (high-speed driving side gear 122H, the HI/LO clutch 123, driven side gear 122L in the embodiment shown in the figure), which is positioned at the lower area in the housing 10, of the various rotating bodies in the speed change hydraulic mechanism 120.

In this embodiment, the peripheral surface 51 integrally includes first to third peripheral surface portions 51a, 51b, 51c each corresponding to the high-speed driving side gear 122H, the HI/LO clutch 123 and the low-speed driving side gear 122L.

The first peripheral surface portion 51a surrounds the area including at least the lowermost end portion of the outer peripheral surface of the high-speed driving side gear 122H, and is formed into a circular arc shape having a central axis substantially concentric with the rotation axis of the high-speed driving side gear 122H when seen along the direction of the rotation axis of the high-speed driving side gear 122H.

Similarly, the second peripheral surface portion 51b and the third peripheral surface portion 51c are respectively formed into circular arc shapes corresponding to the HI/LO clutch 123 and the low-speed driving side gear 122L.

That is, the first peripheral surface portion 51a is formed so that a first radial direction gap between the first peripheral surface 51a and the outer peripheral surface of the high-speed driving side gear 122H is substantially the same throughout the entire region in the circumferential direction of the first peripheral surface portion 51a.

Similarly, the second peripheral surface portion 51b and the third peripheral surface portion 51c are formed so that the second and third radial direction gaps with the outer peripheral surfaces of the corresponding HI/LO clutch 123 and the low-speed driving side gear 122L are each substantially the same throughout the entire region in the respective circumferential direction.

By providing the peripheral surface 51, the oil existed between the peripheral surface 51 and the outer peripheral surface of the corresponding rotating body is subjected to a pumping action involved in the rotating motion of the rotating body and is conveyed from the surrounding space 11 defined by the baffle plate to the main space 12.

The first to third radial direction gaps can be appropriately set as long as the pump effect induced by the rotating body which it surrounds is obtained, and are preferably 3 mm or less, and more preferably 2 mm or less.

At least one of either the first end 53 and the second end 54 is supported by the corresponding bearing portion 210, 220 in a floating-manner so as to be movable in the direction of the rotating shaft.

As shown in Fig. 12, in this embodiment, both the first end 53 and the second end 54 are respectively supported by the first and second bearing portions 210, 220 in a floating-manner.

More specifically, the first end 53 has a first end face 53a extending along an opposing surface, which is faced to the first end 53, of the corresponding first bearing portion 210, and a first convex portion 53b extending outward (direction away from the peripheral surface 51) from the first end face 53a.

A concave portion 211 into which the first convex portion 53b can be inserted is formed in the first bearing portion 210.

That is, in this embodiment, the first end 53 is supported by the first bearing portion 210 in a floating manner via the convex-concave engagement.

The first convex portion may of course be provided on the first bearing portion 210, and the concave portion (e.g., hole or notch) into which the first convex portion can be inserted may be provided on the first end 53.

The second end 54 may also be supported by the corresponding second bearing portion 220 in a floating-manner through convex-concave engaging means, but the specific concave-convex means is different from that of the first end 53.

More specifically, the second end 54 has a second end face 54a extending along an opposing surface, which is faced to the second end 54, of the corresponding second bearing portion 220, and a concave portion 54b (e.g., hole or notch) formed in the second end face 54a.

A second convex portion 221 which can be inserted into the concave portion 54b is provided on the second bearing portion 220.

In this embodiment, a threaded hole is formed in the second bearing portion 220, and a rod-shaped member (e.g., bolt) having a screw portion that is screwed into the threaded hole forms the second convex portion 221.

More specifically, the rod-shaped member 221 has a screw portion 221a that is screwed into the threaded hole, and a pin portion 221b extending from the screw portion 221a so as to project toward the first bearing portion 210 from the opposing surface of the second bearing portion 220.

The second end 54 is supported by the second bearing portion 220 in a floating-manner by having the concave portion 54b engaged into the pin portion 221b.

The baffle plate 50C having the above configuration has the following advantages.

That is, compared to a case in which both the first end and the second end are screwed to the corresponding bearing portions, the attachment work of the baffle plate can be easily performed.

For instance, in this embodiment, when engaging the second end 54 of the baffle plate 50C with the assembly formed by coupling the rotating shaft and the rotating body to the second bearing portion 220, and then coupling the assembly to the first bearing portion 210, the first end 53 of the baffle plate 50C is simultaneously concave-convex engaged with the first bearing portion 210.

In a different assembling method in which the baffle plate 50C is attached after the rotating shaft and the rotating body are coupled to the first and second bearing portions 210, 220, attachment work can be facilitated compared to the configuration of screw coupling.

Further, in this embodiment, a threaded hole does not need to be formed in the baffle plate 50C, as noted above. Therefore, the resin material may be used as the material of the baffle plate 50C, and thus the cost is lowered.

Preferably, as shown in Fig. 12, at least one of the floating supported ends (both the first end 53 and the second end 54 in this embodiment) that are supported in a floating-manner is supported by the corresponding bearing portion 210, 220 in a state of being against the biasing force of the elastic body having a biasing force in the direction of the rotating shaft.

As shown in Fig. 12, in this embodiment, the first end 53 and the second end 54 are biased by rubber 61 and washer 62, respectively, but, for instance, spring may be used in place of the rubber 61.

By employing the configuration where at least one of the floating supported ends 53, 54 that are supported by the corresponding bearing portion 210, 220 in a floating-manner in a state of being against the biasing force of the elastic body, the vibration of the baffle plate 50C is prevented, and thus, abrasion prevention and noise insulation are achieved.

Further, if a sealing member of O ring and the like is used for the elastic body, the liquid tightness between the inside 11 and the outside 12 of the baffle plate 50C can be further enhanced in addition to the above advantages.

### Embodiment 4

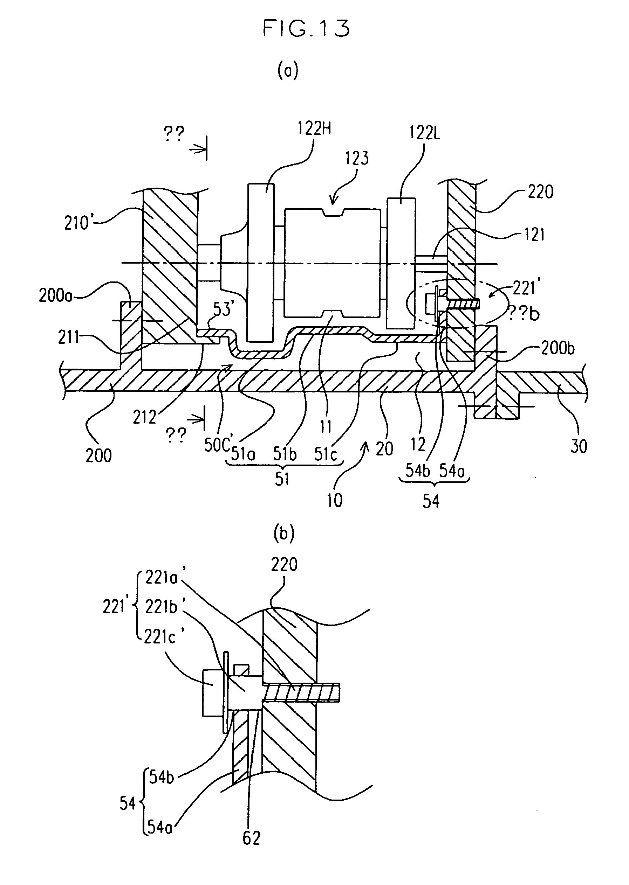

Another embodiment of the baffle plate according to the present invention will now be explained with reference to Fig. 13.

In this embodiment, substantially same elements as those in Embodiment 3 are denoted with the same reference characters or the same reference characters with a dash and thus the detailed description thereof is omitted.

The baffle plate 50C' according to this embodiment has a same configuration as Embodiment 3 in a point that both first end 53' and the second end 54' are supported by the corresponding bearing portion in a floating-manner, but the specific configuration thereof is different from that of Embodiment 3.

More specifically, the baffle plate 50C' has the first end 53' mounted on a supporting surface 212 provided on the first bearing portion 210'.

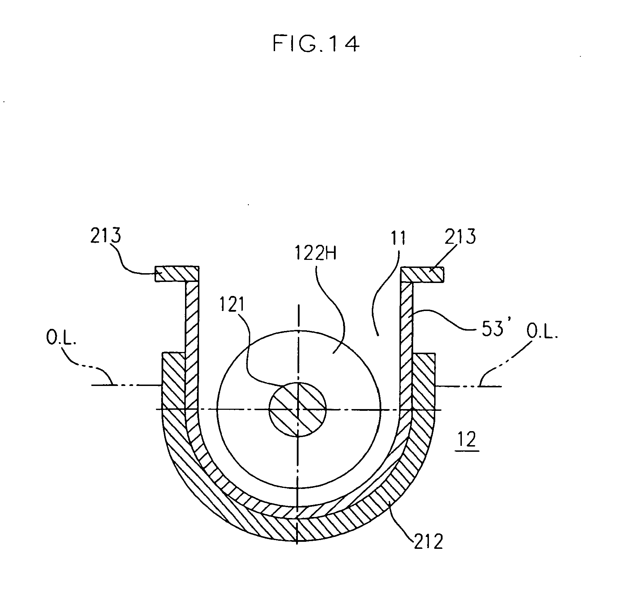

Fig. 14 shows a schematic cross-sectional view taken along line XIV-XIV of Fig. 13.

Preferably, as shown in Fig. 14, a stopper 213 for preventing the back plate 50C' from moving upward is provided on the first bearing portion 210'.

The second end 54 is similar to that in Embodiment 3 in that it is supported by the second bearing portion 220 in a floating-manner by way of a rod-shaped member screwed to the second bearing portion 220, but the specific configuration of the rod-shaped member 221' is changed.

That is, the rod-shaped member 221' has a screw portion 221a' that is screwed into the threaded hole of the second bearing portion 220, a pin portion 221b' that extends from the screw portion 221a' so as to project toward the first bearing portion 210' from the opposing surface of the second bearing 220, and a head portion 221c' that extends toward the first bearing 210' from the pin portion 221b'.

The second end 54 has a concave portion (opening) 54b into which the pin portion 221b' is inserted, and the length of the axis line of the concave portion 54b is set to be longer than the length of the axis line of the pin portion 221b'.

According to such configuration, the second end 54 is supported by the second bearing portion 220 in a floating-manner so as to be movable within the length of the axis line of the pin portion 221b' while preventing the second end 54 from accidentally detaching from the second bearing portion 220.

It is to be noted that in each embodiment, the baffle plate 50C, 50C' is applied to the hydraulic speed change mechanism 120, but the present invention is of course not limited to the relevant embodiment.

That is, the baffle plates 50C, 50C' may be applied to various rotating bodies such as the main speed change mechanism 130, as shown in Fig. 11.

When applying the baffle plates to the main speed change mechanism 130, the main speed change mechanism 130 and the second bearing portion 220 can be easily assembled with the baffle plate 50C (or 50C') fixed to a bearing 35 provided on the middle housing 30.

### Embodiment 5

Still another embodiment of the transmission according to the present invention will now be described with reference to the accompanying drawings.

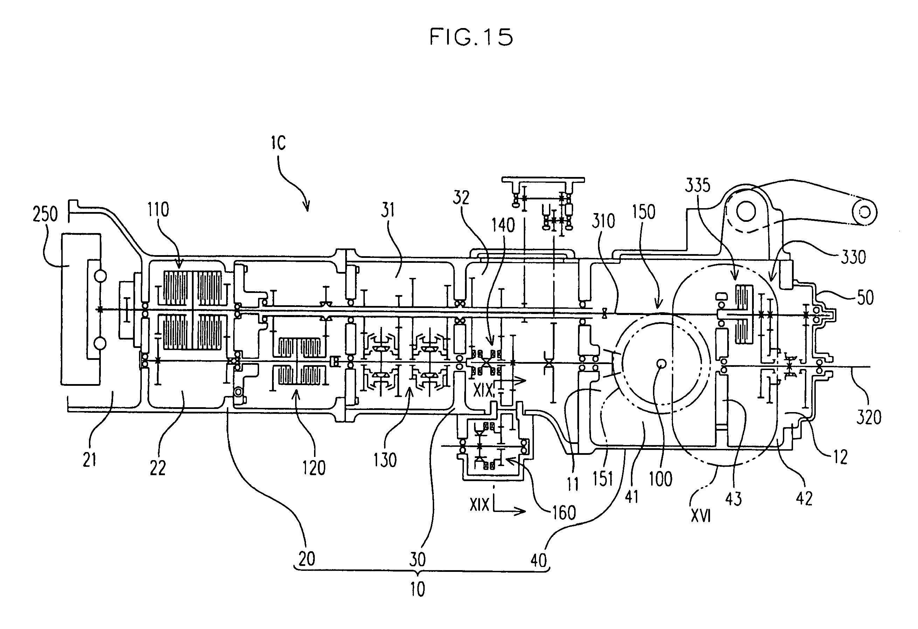

Fig. 15 is a transmission schematic view of a transmission 1C according to this embodiment.

As shown in Fig. 15, the transmission 1C includes a traveling system transmission mechanism for transmitting the driving power from the drive source (not shown) to driving axles 100, and a housing 10 for accommodating the traveling system transmission mechanism.

The traveling system transmission mechanism includes a forward-to-rearward switching hydraulic mechanism 110, a speed change hydraulic mechanism 120 such as a HI/LO, a mechanical main speed change mechanism 130, a mechanical sub-speed change mechanism 140, and a differential gear mechanism 150.

In this embodiment, the traveling system transmission mechanism further includes a four-wheel driving power extracting hydraulic mechanism 160.

The four-wheel driving power extracting hydraulic mechanism 160 is used to drive, in addition to the driving wheel 100 (rear wheel in the embodiment shown in the figure) that is constantly being driven, other wheels (not shown), and is preferably selectively annexed to the housing 10.

The housing 10 is able to store the oil in at least a part of the internal space.

In this embodiment, the housing 10 includes a front housing 20, a middle housing 30 and a rear housing 40 connected in series along a longitudinal direction of the vehicle.

The front housing 20, the middle housing 30 and the rear housing 40 are connected to each other in a freely oil flowing manner. That is, each of the housings has an opening provided on the end facing one another to allow the oil to freely flow through the opening.

More specifically, the front housing 20 has a drying chamber 21 for accommodating a flywheel 250 operatively connected to the drive source, and a first oil chamber 22, positioned on the downstream side in the transmission direction of the drying chamber 21, for accommodating the forward-to-rearward switching hydraulic mechanism 110 and the speed change hydraulic mechanism 120.

The middle housing 30 has a second oil chamber 31 for accommodating the main speed change mechanism, and a third oil chamber 32 for accommodating the sub-speed change mechanism.

It is to be noted that the four-wheel driving power extracting hydraulic mechanism 160 is removably attached to the middle housing 30.

The rear housing 40 includes a fourth oil chamber 41 for accommodating the differential gear mechanism 150, and a PTO system chamber 42 for accommodating the PTO transmission unit 330 of the PTO system transmission mechanism to be described later.

More specifically, the rear housing 40 has a partition wall 43 that separates between the fourth oil chamber 41 and the PTO system chamber 42.

In this embodiment, of the internal spaces of the housing 10, the space defined by the first oil chamber 22, the second oil chamber 31, the third oil chamber 32, the fourth oil chamber 41 and the PTO system chamber 42 is the storage space where operating oil can be stored.

The transmission 1C according to this embodiment includes a PTO system transmission mechanism for outputting the driving power from the drive source outward in addition to the traveling system transmission mechanism.

The PTO system transmission mechanism includes a PTO transmission shaft 310 operatively connected to the drive source, a PTO output shaft 320 for outputting the power outward, and a PTO transmission unit 330 arranged between the PTO transmission shaft 310 and the PTO output shaft 320.

The PTO transmission shaft 310 has a first end operatively connected to the drive source in the front housing 20, and a second end passing through the front housing 20 and the middle housing 30 and reaching the PTO system chamber 42 of the rear housing 40.

In this embodiment, a part of the transmission shaft in the traveling system transmission mechanism is made into a hollow shaft, and thus the transmission itself is made small by inserting the PTO transmission shaft 310 through the hollow shaft.

The PTO output shaft 320 is supported by the housing 10 so that a first end extends inside the PTO system chamber 42 and a second end extends outward from the housing 10.

It is to be noted that in this embodiment, the housing 10 further includes a lid member 50 for closing a back opening of the rear housing 40, and the PTO output shaft 320 is supported by the lid member 50 and the partition wall 43.

The PTO transmission unit 330 operatively connects the PTO transmission shaft 310 and the PTO output shaft 320 in the PTO system chamber 42.

The PTO transmission unit 330 may preferably include a PTO clutch 335 for turning ON/OFF the power transmission from the PTO transmission shaft 310 to the PTO output shaft 320.

More preferably, the PTO transmission unit 330 may include a PTO brake (not shown) for operatively applying the braking force to the PTO output shaft 320 interlockingly with the OFF operation of the PTO clutch 335.

As described above, in the transmission 1C according to this embodiment, of the storage space defined by the first oil chamber 22, the second oil chamber 31, the third oil chamber 32, the fourth oil chamber 41 and the PTO system chamber 42, the traveling system transmission mechanism and the PTO transmission unit 330 are accommodated on one side and the other side, respectively, with the partition wall 43 in between.

That is, the partition wall 43 separates the storage space into the traveling system chamber 11 where the traveling system transmission mechanism is accommodated, and the PTO system chamber 12 where the PTO transmission unit 330 is accommodated.

In addition to the configuration, the transmission 1C according to this embodiment is further configured so that a part of the oil stored in the traveling system chamber 11 is moved to the PTO system chamber 12 by the rotating motion of the rotating body in the traveling system transmission mechanism, and the oil that has been moved is temporarily maintained in the PTO system chamber 12 and then returned to the traveling system chamber 11.

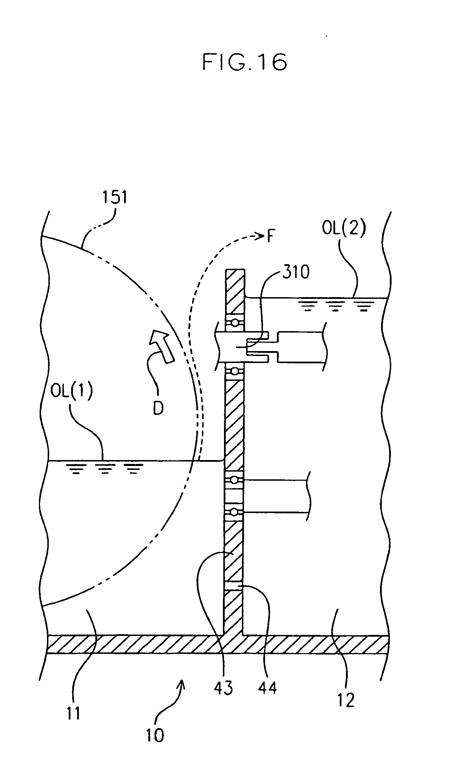

Fig. 16 shows an enlarged schematic view of part XVI of Fig. 15.

As shown in Fig. 16, the partition wall 43 is arranged in the vicinity of a ring gear 151 of the differential gear mechanism 150 and is set to a height in which a part of the stored oil stirred up by the rotation of the ring gear 151 enters into the PTO system chamber 12.

That is, the relative position of the partition wall 43 with respect to the ring gear 151 is set so that the oil (see broken line arrow F) stirred up by the rotation (see arrow D) of the ring gear 151 is moved from the traveling system chamber 11 to the PTO system chamber 12 over the partition wall 43.

The partition wall 43 has an orifice 44 for gradually returning the oil stored in the PTO system chamber 12 back to the traveling system chamber 11.

Preferably, the orifice 44 has an adjustable opening width so as to appropriately set the returning amount of the oil from the PTO system chamber 12 to the traveling system chamber 11.

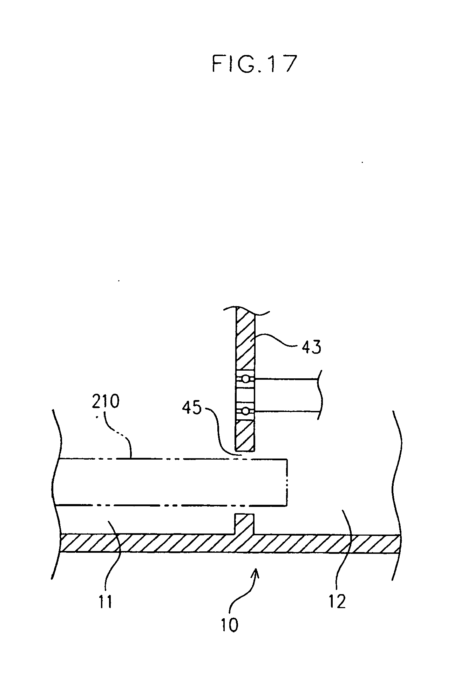

The orifice 44 may also be an inserting hole for a strainer 210 (see Fig. 17).

That is, the strainer 210 arranged in the housing 10 is extended to the PTO system chamber 12, and the gap 45 between the outer peripheral surface of the strainer 210 and the partition wall 43 may be used as the orifice 44 (see Fig. 17).

Therefore, in the transmission 1C according to this embodiment, a part of the stored oil is moved from the traveling system chamber 11 where the traveling system transmission mechanism is accommodated to the PTO chamber 12 where the PTO transmission unit 330 is accommodated by the rotating motion of the rotating body in the traveling system transmission mechanism, and after being temporarily maintained in the PTO system chamber 12, the oil that has been moved is returned to the traveling system chamber 11, thereby effectively preventing the lowering of transmission efficiency in the traveling system transmission mechanism while storing a sufficient amount of oil for preventing oil shortage.

Preferably, a port for the return oil from the various hydraulic mechanisms such as HST to the storage space is provided so as to open out toward the PTO system chamber 12. In such a configuration, the amount of stored oil in the traveling system chamber 11 can be reliably reduced.

In particular, as the transfer of oil from the traveling system chamber 11 to the PTO system chamber 12 is performed through the rotating motion of the rotating body in the traveling system transmission mechanism, the amount of oil moved from the traveling system chamber 11 to the PTO system chamber 12 changes in accordance with the traveling speed of the vehicle.

That is, as the traveling speed of the vehicle become faster, the amount of oil moved from the traveling system chamber 11 to the PTO system chamber 12 increases, and the amount of stored oil in the traveling system chamber 11 decreases.

Therefore, in high-speed traveling where transmission efficiency of the traveling system transmission mechanism particularly becomes important, the lowering of transmission efficiency of the traveling system transmission mechanism can be more effectively prevented.

When the vehicle is high-speed traveling, the PTO system transmission mechanism is normally in a power shut-off state, and thus increase in the amount of stored oil in the PTO system chamber 12 does not become a problem.

In this embodiment, the traveling system chamber 11 and the PTO system chamber 12 are separated by the partition wall 43 supporting the PTO transmission shaft 310 and the PTO output shaft 330. The power for moving the oil from the traveling system chamber 11 to the PTO system chamber 12 is obtained through rotation in the traveling system transmission mechanism.

That is, the transmission 1C according to this embodiment can achieve the above advantages without substantially including an additional member in comparison with the conventional transmission.

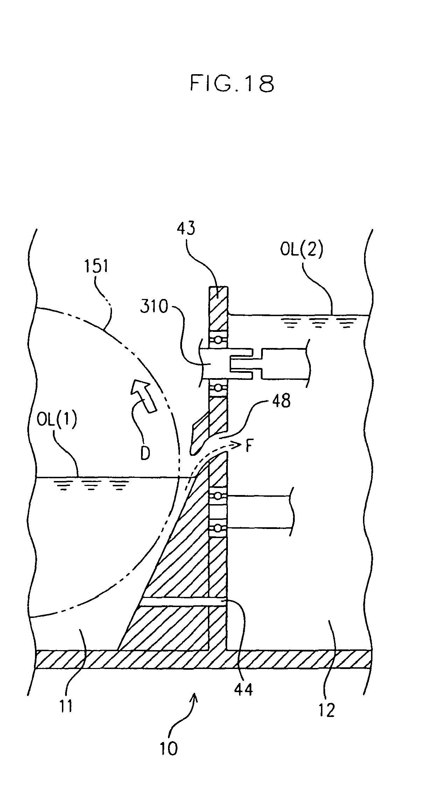

In this embodiment, the oil is moved from the traveling system chamber 11 to the PTO system chamber 12 by stirring up the oil involved in the rotating motion of the ring gear 151 in the differential gear mechanism 150, but the oil may instead be moved from the traveling system chamber 11 to the PTO system chamber 12 by the pump effect through the rotating motion of the ring gear 151 (see Fig. 18).

That is, a suction port 48 for allowing the oil to flow from the traveling system chamber 11 to the PTO system chamber 12 by the pump effect of the ring gear 151 may be provided in the partition wall 43.

### Embodiment 6

The transmission according to yet another embodiments of the present invention will now be described with reference to the accompanying drawings.

The transmission 1C' according to this embodiment is substantially the same as that of Embodiment 5 except for the configuration for moving the oil from the traveling system chamber 11 to the PTO system chamber 12.

Therefore, in this embodiment, elements same as or corresponding to those in Embodiment 5 are denoted with the same reference characters, and the description thereof is omitted.

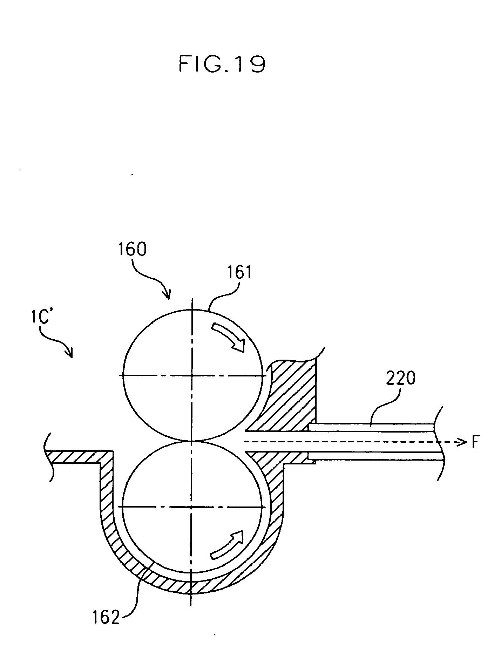

Fig. 19 is a partial vertical schematic view of the transmission 1C' according to this embodiment and is a schematic cross-sectional view taken along the cross section corresponding to line XIX-XIX of Fig. 15.

In the transmission 1C', the oil is moved from the traveling system chamber 11 to the PTO system chamber 12 using the pump effect by the gear train configured so as to be constantly meshed in the traveling system transmission mechanism.

In this embodiment, as shown in Fig. 19, the driving side gear 161 and the driven side gear 162 in the four-wheel driving power extracting hydraulic mechanism 160 are used as the gear train.

A part of the stored oil in the traveling system chamber 11 is moved to the PTO system chamber 12 by way of the external conduit 220 using the pump effect involved in the rotation of the driving side gear 161 and the driven side gear 162.

In the transmission 1C' of the relevant configuration, effects similar to those of Embodiment 5 can be also obtained.

### Embodiment 7

The transmission according to yet another embodiment of the present invention will now be described with reference to the accompanying drawings.

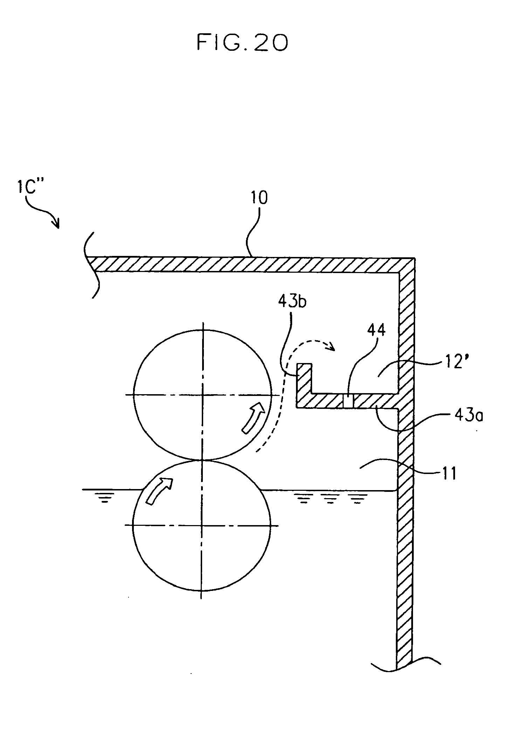

Fig. 20 is a partial vertical schematic view of a transmission 1C" according to this embodiment.

As noted above, in Embodiments 5 and 6, the storage space of the housing 10 is separated into the traveling system chamber 11 where the traveling system transmission mechanism is accommodated and the PTO system chamber 12 where the PTO transmission unit 330 is accommodated. The PTO system chamber 12 is also used as a reservoir chamber for temporarily retaining the oil moved from the traveling system chamber 11.

In this embodiment, on the other hand, a dedicated retaining chamber 12' is used as the reservoir chamber.

The retaining chamber 12' is so configured to receive the oil that is stirred up and moved by the rotating motion of the traveling system transmission mechanism from the traveling chamber 11 at a position isolated from the traveling system transmission mechanism, and gradually return the received oil back to the traveling system chamber 11.

As shown in Fig. 20, in this embodiment, the retaining chamber 15' is formed by a bottom wall 43a extending inward from the side wall of the housing 10 and a side wall 43b extending upward from the free end of the bottom wall 43a.

The orifice 44 is provided in the bottom wall 43a.

In the transmission 1C" of the relevant configuration, effects similar to those of Embodiments 5 and 6 can be also obtained.

### Embodiment 8

A preferred embodiment of a transmission according to the present invention will now be described with reference to the accompanying drawings.

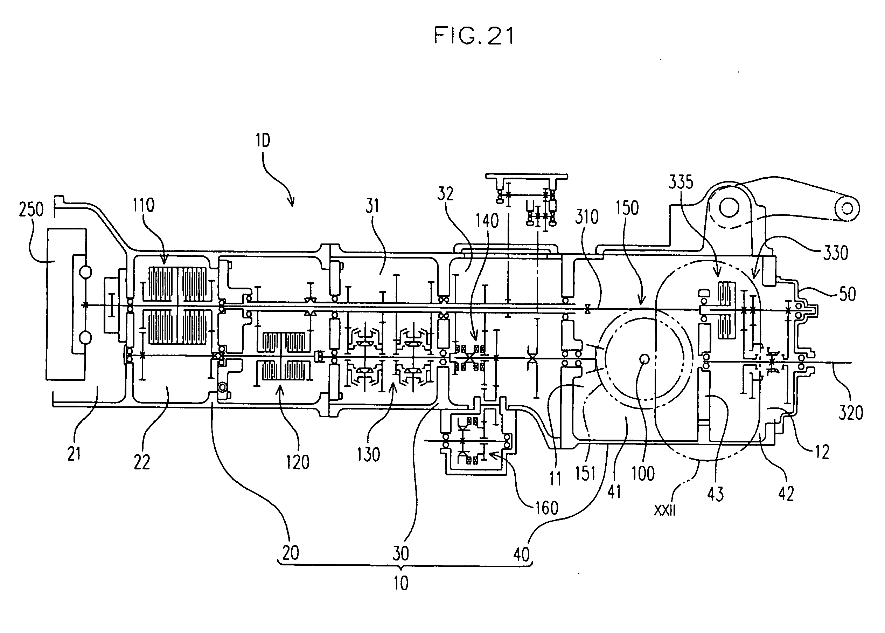

Fig. 21 is a transmission schematic view of a transmission 1D according to this embodiment.

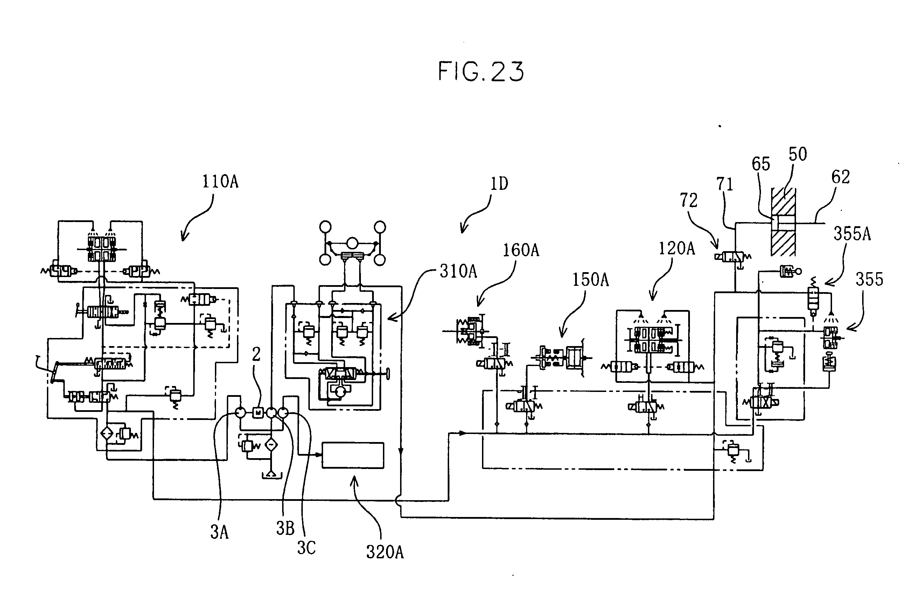

As shown in Fig. 21, the transmission 1D includes a traveling system transmission mechanism for transmitting the driving power from the drive source 2 (see Fig. 23) to the driving axles 100, and a housing 10 for accommodating the traveling system transmission mechanism.

The traveling system transmission mechanism includes a forward-to-rearward switching hydraulic mechanism 110, a speed change hydraulic mechanism 120 such as a HI/LO, a mechanical main speed change mechanism 130, a mechanical sub-speed change mechanism 140, and a differential gear mechanism 150.

In this embodiment, the traveling system transmission mechanism further includes a four-wheel driving power extracting hydraulic mechanism 160.

The four-wheel driving power extracting hydraulic mechanism 160 is used to drive, in addition to the driving wheel 100 (rear wheel in the embodiment shown in the figure) that is constantly being driven, other wheels (not shown), and is preferably selectively annexed to the housing 10.

The housing 10 is able to store the oil in at least a part of the internal space.

In this embodiment, the housing 10 includes a front housing 20, a middle housing 30 and a rear housing 40 connected in series along a longitudinal direction of the vehicle.

The front housing 20, the middle housing 30 and the rear housing 40 are connected to each other in a freely oil flowing manner. That is, each of the housings has an opening provided on the end facing one another to allow the oil to freely flow through the opening.

More specifically, the front housing 20 has a drying chamber 21 for accommodating a flywheel 250 operatively connected to the drive source 2, and a first oil chamber 22, positioned on the downstream side in the transmission direction of the drying chamber 21, for accommodating the forward-to-rearward switching hydraulic mechanism 110 and the speed change hydraulic mechanism 120.

The middle housing 30 has a second oil chamber 31 for accommodating the main speed change mechanism, and a third oil chamber 32 for accommodating the sub-speed change mechanism.

It is to be noted that the four-wheel driving power extracting hydraulic mechanism 160 is removably attached to the middle housing 30.

The rear housing 40 includes a fourth oil chamber 41 for accommodating the differential gear mechanism 150, and a PTO system chamber 42 for accommodating the PTO transmission unit 330 of the PTO system transmission mechanism to be described later.

More specifically, the rear housing 40 has a partition wall 43 that separates between the fourth oil chamber 41 and the PTO system chamber 42 in a liquid sealing manner.

In this embodiment, of the internal spaces of the housing 10, the space defined by the first oil chamber 22, the second oil chamber 31, the third oil chamber 32, the fourth oil chamber 41 and the PTO system chamber 42 is the storage space where operating oil can be stored.

The transmission 1D according to this embodiment includes a PTO system transmission mechanism for outputting the driving power from the drive source 2 outward, in addition to the traveling system transmission mechanism.

The PTO system transmission mechanism includes a PTO transmission shaft 310 operatively connected to the drive source 2, a PTO output shaft 320 for outputting the power outward, and a PTO transmission unit 330 arranged between the PTO transmission shaft 310 and the PTO output shaft 320.

The PTO transmission shaft 310 has a first end operatively connected to the drive source 2 in the front housing 20, and a second end passing through the front housing 20 and the middle housing 30 and reaching the PTO system chamber 42 of the rear housing 40.

In this embodiment, a part of the transmission shaft in the traveling system transmission mechanism is made into a hollow shaft, and thus the transmission itself is made small by inserting the PTO transmission shaft 310 through the hollow shaft.

The PTO output shaft 320 is supported by the housing 10 so that a first end extends inside the PTO system chamber 42 and a second end extends outward from the housing 10.

It is to be noted that in this embodiment, the housing 10 further includes a lid member 50 for closing a back opening of the rear housing 40, and the PTO output shaft 320 is supported by the lid member 50 and the partition wall 43.

The PTO transmission unit 330 operatively connects the PTO transmission shaft 310 and the PTO output shaft 320 in the PTO system chamber 42.

The PTO transmission unit 330 may preferably include a hydraulic PTO clutch 335 for turning ON/OFF the power transmission from the PTO transmission shaft 310 to the PTO output shaft 320.

More preferably, the PTO transmission unit 330 may include a hydraulic PTO brake (not shown) for operatively applying the braking force to the PTO output shaft 320 interlockingly with the OFF operation of the hydraulic PTO clutch 335.

In the transmission 1D according to this embodiment, the traveling system transmission mechanism and the PTO transmission unit 330 are respectively accommodated on one side and the other side with the partition wall 43 therebetween in the storage spaces defined by the first oil chamber 22, the second oil chamber 31, the third oil chamber 32, the fourth oil chamber 41 and the PTO system chamber 42.

That is, the partition wall 43 separates the storage space where oil can be stored, into the traveling system chamber 11 where the traveling system transmission mechanism is accommodated and the PTO system chamber 42 where the PTO transmission unit 330 is accommodated, the PTO system chamber 42 serving as the reservoir chamber 12 that is separated from the traveling system chamber 11 in a liquid sealing manner.

In addition to the configuration, the transmission 1D according to this embodiment is further configured so that a part of the oil stored in the traveling system chamber 11 is moved to the reservoir chamber 12 (PTO system chamber 42 in this embodiment) by the rotating motion of the rotating body in the traveling system transmission mechanism.

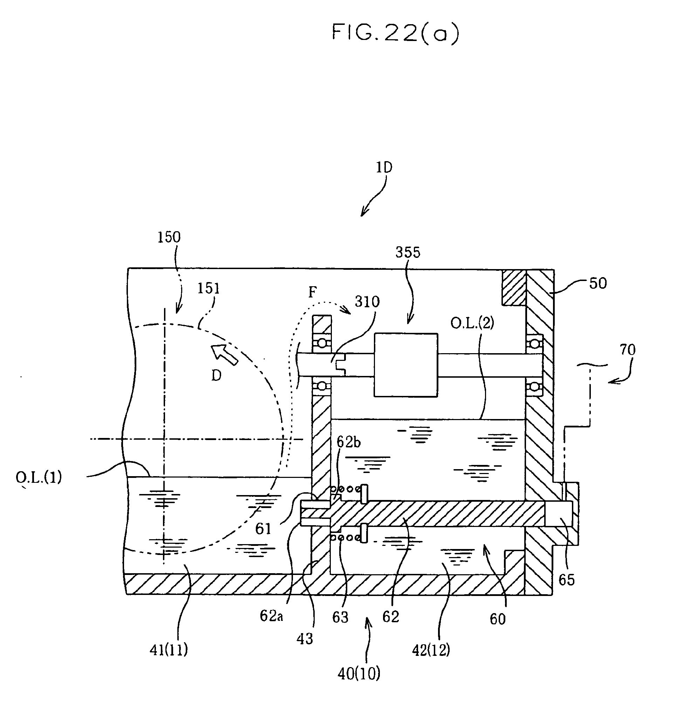

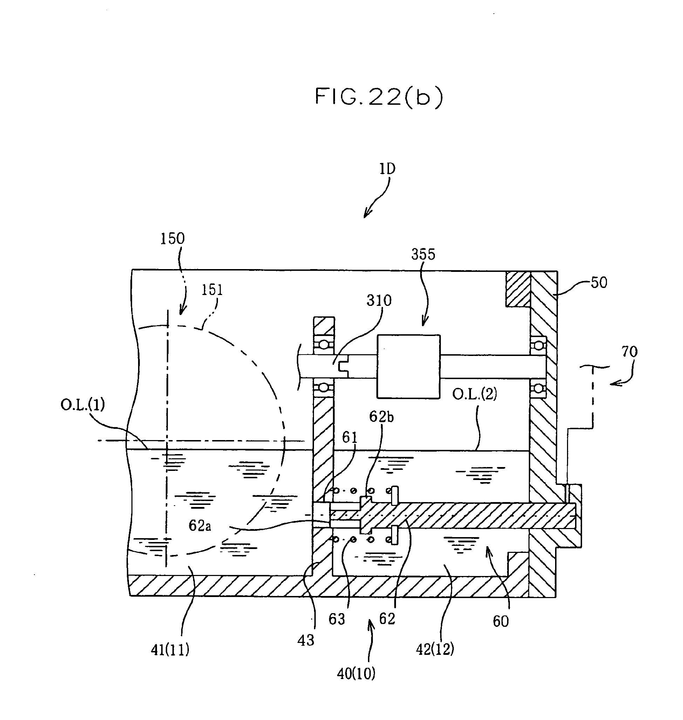

Fig. 22 shows an enlarged schematic view of part XXII of Fig. 21.

As shown in Fig. 22, the partition wall 43 is arranged in the vicinity of the ring gear 151 of the differential gear mechanism 150 and is set to a height in which a part of the stored oil stirred up by the rotation of the ring gear 151 enters the PTO system chamber 42.

That is, the relative position of the partition wall 43 with respect to the ring gear 151 is set so that the oil (see broken line arrow F) stirred up by the rotation (see arrow D) of the ring gear 151 is moved from the traveling system chamber 11 to the PTO system chamber 42 over the partition wall 43.

An open/close device 60 is provided in the partition wall 43.

The open/close device 60 is configured so as to maintain the separated state where the traveling system chamber 11 and the reservoir chamber 12 are separated each other at a time when the traveling system transmission mechanism is rotating, and to communicate the traveling system chamber 11 and the reservoir chamber 12 at a time when the traveling system transmission mechanism is stopped.

More specifically, the open/close device 60 includes an opening 61 formed in the partition wall 43 to communicate the traveling system chamber 11 and the reservoir chamber 12, an open/close member 62 that takes a closed position (see Fig. 22(a)) for closing the opening 61 and an opened position (see Fig. 22(b)) for opening the opening 61, a biasing member 63 for biasing the open/close member 62 toward the opened position, and a pushing mechanism 70 for pushing the open/close member 62 toward the closed position against the biasing force of the biasing member 63.

In this embodiment, as shown in Fig. 2, the open/close member 62 is a rod-shaped member inserted to the opening 61 movable in the axis line direction, and is configured to close the opening 61 at a first position (see Fig. 22(a)) in the axis line direction and to open the opening 61 at a second position (see Fig. 22(b)) in the axis line direction.

For instance, the rod-shaped member may have a first end portion 62a, on a side near to the traveling system chamber, formed into a grooved portion with a spline groove on the outer peripheral surface, and the portion 62b, on the opposite side of the traveling system chamber 11 with the first end portion 62a interposed therebetween, having the same diameter as the opening 61 or a larger diameter than the opening 61.

The biasing member 63 taking a form of a coil spring and the like is arranged so as to bias the open/close member 62 toward the second position (see Fig. 22(b)) in the axis line direction.

In place of the grooved portion, the first end portion 62a may of course be a small diameter portion having a smaller diameter than the opening 61, or an axis line hole in which a first end communicates to the traveling system chamber 11 and a second end communicates to the PTO system chamber 12 may be formed in the first end portion 62a.

The pushing mechanism 70 is configured so as to forcibly move the open/close member 62, which is positioned at the closed position by the biasing member 63 in a normal state, to the opened position.

Fig. 23 shows a hydraulic circuit diagram of the transmission according to this embodiment.

As shown in Fig. 23, the transmission 1D includes a hydraulic circuit 110A for the forward-to-rearward switching hydraulic mechanism 110, a hydraulic circuit 120A for the speed change hydraulic mechanism 120, a hydraulic circuit 160A for the four-wheel driving power extracting hydraulic mechanism 160, and a hydraulic circuit 335A for the hydraulic PTO clutch device 355.

Reference numerals 310A and 320A in Fig. 23 denote a hydraulic circuit for a power steering and a hydraulic circuit for a work lift, respectively. Further, a reference numeral 150A denotes a hydraulic circuit for locking the differential gear unit.

More specifically, the pushing mechanism 70 is configured so as to push the open/close member 62 toward the opened position using the oil pressure of the pressure oil from the hydraulic pumps 3A to 3C operatively driven by the drive source 2.

In this embodiment, as shown in Fig. 23, the pushing mechanism 70 has a pressure oil supply line 71 for communicating the hydraulic circuit 355A and the open/close member 62 so that the open/close member 62 is pushed to the closed position by the pressure oil of the hydraulic PTO clutch device hydraulic circuit 355A, and a switching valve 72 inserted in the pressure oil supply line 71.

More specifically, a first end of the pressure oil supply line 71 is communicated to the hydraulic circuit 355A.

A second end of the pressure oil supply line 71 is communicated to the hydraulic chamber 65 so that the open/close member 62 is pushed to the closed position against the biasing force of the biasing member 63 by the pressure oil flowing through the pressure oil supply line 71.

The switching valve 72 is configured to communicate and block the pressure oil supply line 71 when the traveling system transmission mechanism is rotated and stopped, respectively.

That is, when the traveling system transmission mechanism performs the rotating motion, the switching valve 72 has the pressure oil supply line 71 in a communicating state. In this state, the pressure oil acts on the open/close member 62 by way of the pressure oil supply line 71, thereby pushing the open/close member 62 to the closed position against the biasing force of the biasing member 63. Therefore, the traveling system chamber 11 and the PTO system chamber 12 are separated from each other in a liquid sealing manner.

On the other hand, when the traveling system transmission mechanism is stopped, the switching valve 72 has the pressure oil supply line 71 in a blocked state. In this state, the open/close member 62 is held at the opened position by the biasing force of the biasing member 63. Therefore, the traveling system chamber 11 and the PTO system chamber 12 are in a communicating state.

The transmission 1D of the relevant configuration has the following advantages.

That is, in the transmission 1D, as noted above, a part of the stored oil is moved from the traveling system chamber 11 where the traveling system transmission mechanism is received to the PTO system chamber 42 acting as the reservoir chamber 12 by using the rotating motion of the rotating body in the traveling system transmission mechanism.

Therefore, even if a sufficient amount of oil is stored in the housing 10, the transmission efficiency of the traveling system transmission mechanism can be effectively prevented from lowering.

Further, when the traveling system transmission mechanism is stopped, as noted above, the reservoir chamber 12 and the traveling system chamber 11 are communicated by the open/close mechanism 60, and thus oil shortage phenomenon at the start of the operation of the traveling system transmission mechanism can be effectively prevented.

That is, when the traveling system transmission mechanism is rotating, since a part of the stored oil in the traveling system chamber 11 is moved to the reservoir chamber 12, the oil level O.L. (1) of the traveling system chamber 11 becomes lower than the oil level O.L. (2) of the reservoir chamber 12.

Normally, since extraction of the stored oil is performed from a predetermined portion of the traveling system chamber 11 in terms of filter accommodating space and the like, if the oil level O.L. (1) of the traveling system chamber 11 is low, air may be mixed when extracting the stored oil.

In the transmission 1D according to this embodiment, however, as noted above, when the traveling system transmission mechanism is stopped, the reservoir chamber 12 communicates to the traveling system chamber 11, and thus the oil level of both chambers rapidly become even.

Therefore, the oil shortage phenomenon at the start of the operation of the traveling system transmission mechanism can be effectively prevented.

In this embodiment, the pressure oil supply line 71 is configured so as to communicate to the PTO clutch hydraulic circuit 355A, but may of course be configured so as to extract the pressure oil for pushing the open/close member from the other oil circuit.

Further, in this embodiment, the switching valve 72 is inserted in the pressure oil supply line 71, but the switching valve 72 may be omitted.

That is, each of the hydraulic circuits in the transmission takes a predetermined set pressure when the hydraulic source such as hydraulic pumps 3A to 3B and the like is operating, and a normal pressure lower than the set pressure when the hydraulic source is stopped.

Therefore, by having the biasing force of the biasing member 63 weaker than the pushing force by the set pressure and stronger than the pushing force by the normal pressure, the above advantages can be obtained without arranging the switching valve 72.

### Embodiment 9

Yet another embodiment of the transmission according to the present invention will now be explained with reference to Fig. 4.

The elements same as or corresponding to those of Embodiment 8 are denoted with the same reference characters or the same reference characters with a dash, and thus the detailed description thereof is omitted.

In Embodiment 8, the open/close member 62 is pushed toward the closed position using the oil pressure of the hydraulic circuit, but in this embodiment, the open/close member 262 is pushed toward the closed position by the flow of the stored oil.

More specifically, the transmission 1D' includes an open/close device 260 in place of the open/close device 60.

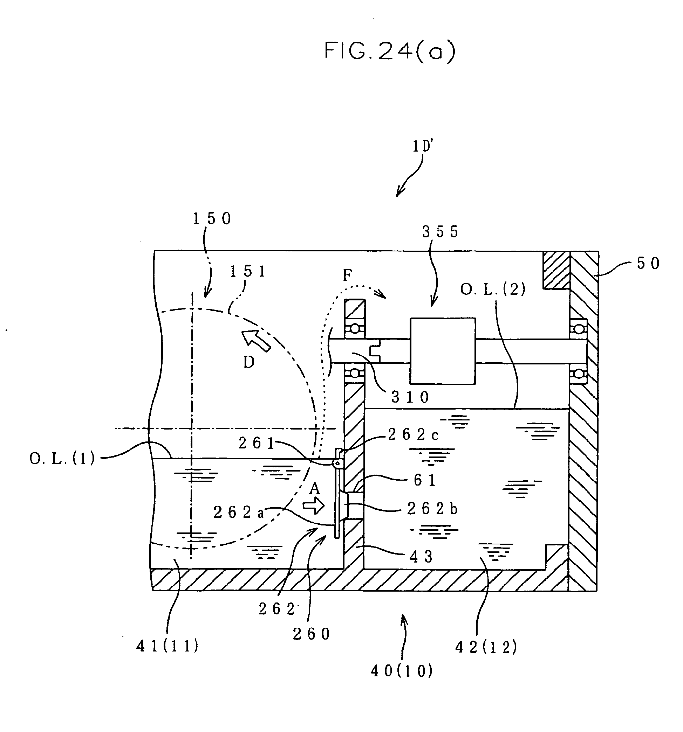

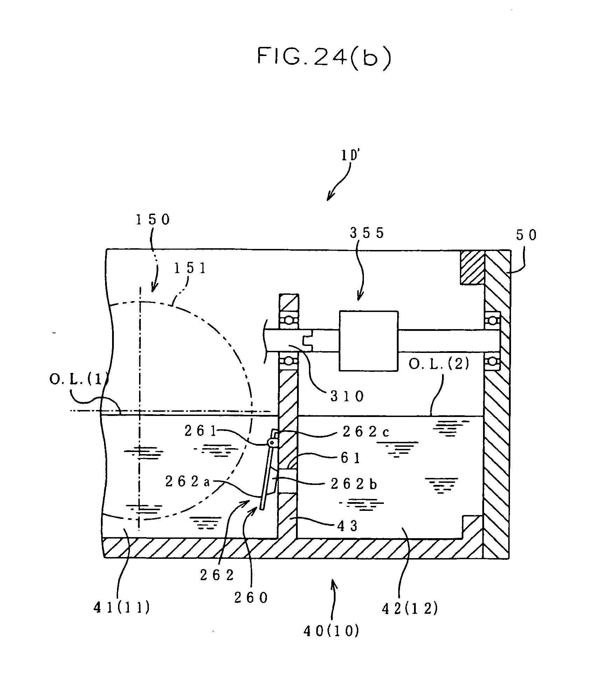

The open/close device 260 includes an opening 61 formed in the partition wall 43, an open/close member 262 that takes a closed position (see Fig. 24(a)) for closing the opening 61 and an opened position (see Fig. 24(b)) for opening the opening 61, and a biasing member (not shown) for biasing the open/close member 262 toward the opened position.

As shown in Fig. 24, the open/close member 262 is arranged in the traveling system chamber 11 so as to be positioned between the ring gear 151 and the partition wall 43.

More specifically, the open/close member 262 has a main body portion 262a that freely swings about a pivot shaft 262 parallel to the rotation axis of the ring gear 151, and a sealing portion 262b that projects out toward the partition wall 43 from the main body portion 262a.

The main body portion 262a is biased in such a direction (clockwise in Fig. 4) that the sealing portion 262b moves away from the partition wall 43 by the biasing force of the biasing member.

In this embodiment, the biasing member is a coil spring wound around the pivot shaft 261.

The main body portion 262a is configured so that the sealing portion 262b swings in a direction (counterclockwise in Fig. 24) that approaches the partition wall 43 when receiving the flow (arrow A of Fig. 24) of the stored oil involved in the rotation of the ring gear 151.

That is, the main body portion 262a is positioned at the opened position by the biasing force of the biasing member when the ring gear 151 is stopped, and is positioned at the closed position by the flow of the stored oil involved in the rotation of the ring gear 151 when the ring gear 151 is rotating.

The sealing portion 262b has a geometry that closes the opening 61 when the main body portion 262a is positioned at the closed position.

It is to be noted that a reference numeral 262c in Fig. 24 denotes a stopper provided on the main body portion 262a to define the swinging range of the main body portion 262a by the biasing force of the biasing member.

In this relevant embodiment, similar to Embodiment 8, even if a sufficient amount of oil is stored in the housing 10, the lowering of transmission efficiency of the traveling system transmission mechanism can be prevented, and further, oil shortage phenomenon in extracting the stored oil from the traveling system chamber can be effectively prevented.

In each embodiment, the PTO system chamber 42 is used as the reservoir chamber 12, and a part of the stored oil in the traveling system chamber 11 is moved to the PTO system chamber 42, but the present invention is not limited to the thus configuration. That is, various spaces may be used as the reservoir chamber as long as the stored oil moved from the traveling system chamber 11 is retained.

## Claims

1. A transmission comprising a driving shaft (121) operatively connected to a driving source, a transmission mechanism including a rotating body, and a housing (10) for accommodating the transmission mechanism and having a storage space (22, 31, 32, 41, 42) where oil can be stored, the rotating body including a pair of gears (122H, 122L) supported by the driving shaft (121) in a relatively rotatable manner with respect thereto and also including a hydraulic clutch (123) supported by the driving shaft (121) so as to be positioned between the pair of gears (122H, 122L) in an axial direction of the driving shaft (121) and selectively transmitting rotational power of the driving shaft (121) to one of the pair of gears (122H, 122L), the transmission further comprising a baffle plate (50A; 50B; 50B'; 50C; 50C') and being **characterized in that**,
the baffle plate (50A; 50B; 50B'; 50C; 50C') is installed in the housing (10) so as to separate the storage space (22, 31, 32, 41, 42) of the housing (10) into a surrounding space (11) for surrounding at least the lowermost end portion of the rotating body and a main space (12) other than the surrounding space (11) in a liquid sealing manner,
the baffle plate (50A; 50B; 50B'; 50C; 50C') includes a peripheral surface portion (51) that is along an outer peripheral surface of the rotating body so as to surround an area including at least the lowermost end portion of the outer peripheral surface of the rotating body while allowing the oil in the surrounding space (11) to be transferred to the main space (12) by a pump effect involved in the rotating motion of the rotating body, and
the peripheral surface portion (51) is formed into a circular shape having a central axis concentric with a rotational axis of the rotating body as viewed along the rotational axis of the rotating body, and includes first to third peripheral surfaces (51a-51c) corresponding to one of the pair of gears (122H, 122L), the hydraulic clutch and the other of the pair of gears (122H, 1221), respectively.

2. The transmission according to claim 1, wherein the baffle plate (50A; 50B; 50B'; 50C; 50C') further comprises side surface portions (52) extending upward from both upper ends of the peripheral surface portion (51) so as to be formed into a U-shape as viewed from the rotational axis of the rotating body.

3. The transmission according to claim 1 or 2, further comprising a bearing support plate (210, 220) mounted in the housing (10),
wherein the baffle plate (50A; 50B; 50B'; 50C; 50C') further comprises an attachment (53, 54) attached to the bearing support plate (210, 220), and
wherein the baffle plate (50A; 50B; 50B'; 50C; 50C') separates the surrounding space (11) and the main space (12) in a liquid sealing manner in cooperation with the bearing support plate (210, 220).

4. The according transmission to claim 1 or 2,
wherein the baffle plate (50A; 50B; 50B'; 50C; 50C') further comprises a pair of end faces (53, 54) extending in a radial direction from both ends in the central axis direction of the peripheral surface so as to cover at least an area including the lowermost end portion of both ends in the direction of the rotation axis of the rotating body, and
wherein the surrounding space (11) and the main space (12) are separated in a liquid sealing manner by the peripheral surface and the pair of end faces (53, 54).

5. The transmission according to claim 4, wherein a gap between the pair of end faces and the opposing end faces of the rotating body is 3 mm or less.

6. The transmission according to any one of claims 1 to 4, wherein a gap in the radial direction between the peripheral surface portion (51) and the outer peripheral surface of the rotating body is 3 mm or less.

## Patentansprüche

1. Getriebe, das Folgendes umfasst:
- eine Antriebswelle (121), die mit einer Antriebsquelle wirkverbunden ist;
- einen Getriebemechanismus, der einen rotierenden Körper enthält; und
- ein Gehäuse (10) zum Aufnehmen des Getriebemechanismus und mit einem Speicherraum (22, 31, 32, 41, 42), in dem Öl gespeichert werden kann; wobei der rotierende Körper ein Paar Zahnräder (122H, 122L) enthält, die auf der Antriebswelle (121) in einer relativ zu dieser drehbaren Weise gelagert sind, und außerdem eine hydraulische Kupplung (123) enthält, die auf der Antriebswelle (121) so gelagert ist, dass sie sich in einer axialen Richtung der Antriebswelle (121) zwischen dem Paar Zahnräder (122H, 122L) befindet und selektiv eine Rotationskraft der Antriebswelle (121) zu einem der Paar Zahnräder (122H, 122L) überträgt; wobei das Getriebe des Weiteren eine Prallplatte (50A; 50B; 50B'; 50C; 50C') enthält und
**dadurch gekennzeichnet ist, dass**
die Prallplatte (50A; 508; 50B'; 50C) 50C') so in dem Gehäuse (10) installiert ist, dass sie den Speicherraum (22, 31, 32, 41, 42) des Gehäuses (10) in einen umgebenden Raum (11) zum Umgeben mindestens des untersten Endabschnitts des rotierenden Körpers und einen Hauptraum (12), der nicht Teil des umgebenden Raumes (11) ist, in einer flüssigkeitsdichten Weise unterteilt,
die Prallplatte (50A; 50B; 50B'; 50C; 50C') einen Umfangsflächenabschnitt (51) enthält, der sich in einer solchen Weise entlang einer Außenumfangsfläche des rotierenden Körpers erstreckt, dass er einen Bereich umfängt, der mindestens den untersten Endabschnitt der Außenumfangsfläche des rotierenden Körpers enthält, während das Öl in dem umgebenden Raum (11) durch eine Pumpwirkung, die durch die Drehbewegung des rotierenden Körpers entsteht, zu dem Hauptraum (12) transferiert werden kann, und
der Umfangsflächenabschnitt (51) eine Kreisform aufweist und eine Mittelachse enthält, die konzentrisch zu einer Rotationsachse des rotierenden Körpers - entlang der Rotationsachse des rotierenden Körpers gesehen - verläuft, und erste bis dritte Umfangsflächen (51a-51c) enthält, die einem des Paares Zahnräder (122H, 122L), der hydraulischen Kupplung bzw. dem anderen des Paares Zahnräder (122H, 1221) entspricht.

2. Getriebe nach Anspruch 1, wobei die Prallplatte (50A; 50B; 50B'; 50C; 50C') des Weiteren Seitenflächenabschnitte (52) umfasst, die sich von beiden oberen Enden des Umfangsflächenabschnitts (51) dergestalt aufwärts erstrecken, dass sie - von der Rotationsachse des rotierenden Körpers aus gesehen - eine U-Form bilden.

3. Getriebe nach Anspruch 1 oder 2, das des Weiteren eine Lagerstützplatte (210, 220) umfasst, die in dem Gehäuse (10) montiert ist,
wobei die Prallplatte (50A; 50B; 50B'; 50C; 50C') des Weiteren ein Anbauteil (53, 54) umfasst, das an der Lagerstützplatte (210, 220) angebracht ist, und
wobei die Prallplatte (50A; 50B, 50B') 50C; 50C') den umgebenden Raum (11) und den Hauptraum (12) in einer flüssigkeitsdichten Weise im Zusammenwirken mit der Lagerstützplatte (210, 220) trennt.

4. Getriebe nach Anspruch 1 oder 2,
wobei die Prallplatte (50A; 508; 50B'; 50C; 50C') des Weiteren ein Paar Endflächen (53, 54) umfasst, die sich in einer radialen Richtung von beiden Enden in der Mittelachsenrichtung der Umfangsfläche dergestalt erstrecken, dass sie mindestens einen Bereich bedecken, der den untersten Endabschnitt beider Enden in der Richtung der Drehachse des rotierenden Körpers enthält, und
wobei der umgebende Raum (11) und der Hauptraum (12) in einer flüssigkeitsdichten Weise durch die Umfangsfläche und das Paar Endflächen (53, 54) geteilt werden.

5. Getriebe nach Anspruch 4, wobei ein Spalt zwischen dem Paar Endflächen und den gegenüberliegenden Endflächen des rotierenden Körpers maximal 3 mm beträgt.

6. Getriebe nach einem der Ansprüche 1 bis 4, wobei ein Spalt in der radialen Richtung zwischen dem Umfangsflächenabschnitt (51) und der Außenumfangsfläche des rotierenden Körpers maximal 3 mm beträgt.

## Revendications

1. Transmission comprenant :
- un arbre d'entraînement (121) relié de manière opérationnelle à une source d'entraînement,
- un mécanisme de transmission comprenant un corps de rotation, et
- un carter (10) destiné à loger le mécanisme de transmission et ayant un espace de stockage (22, 31, 32, 41, 42) dans lequel de l'huile peut être stockée, le corps de rotation comprenant une paire d'engrenages (122H, 122L) supportés par l'arbre d'entraînement (121) d'une manière relativement rotative par rapport à ce dernier et comprenant également un embrayage hydraulique (123) supporté par l'arbre d'entraînement (121) de manière à être positionné entre la paire d'engrenages (122H, 122L) dans une direction axiale de l'arbre d'entraînement (121) et transmettant sélectivement la force de rotation de l'arbre d'entraînement (121) à l'un des engrenages de la paire d'engrenages (122H, 122L), la transmission comprenant en outre une tôle-chicane (50A ; 5013 ; 5013' ; 50C ; 50C') et
**caractérisée par le fait que**
la tôle-chicane (50A ; 5013 ; 5013' ; 50C ; 50C') est installée dans le carter (10) de manière à séparer l'espace de stockage (22, 31, 32, 41, 42) du carter (10) en un espace avoisinant (11) pour entourer au moins la partie terminale la plus inférieure du corps de rotation et un espace principal (12) autre que l'espace environnant (11) de manière étanche au liquide,
la tôle-chicane (50A ; 5013 ; 5013' ; 50C ; 50C') comprend une partie de surface périphérique (51) située le long d'une surface périphérique du corps de rotation de manière à entourer une zone comprenant au moins la partie terminale la plus inférieure de la surface périphérique extérieure du corps de rotation tout en permettant à l'huile dans l'espace environnant (11) d'être transférée dans l'espace principal (12) par un effet de pompe impliqué dans un mouvement de rotation du corps de rotation, et
la partie de surface périphérique (51) est façonnée en une forme circulaire ayant une axe central concentrique avec un axe de rotation du corps de rotation tel que visualisé le long de l'axe de rotation du corps de rotation, et comprend une première à une troisième surface périphérique (51a à 51c) correspondant respectivement à une des paires d'engrenages (122H, 122L), l'embrayage hydraulique et l'autre paire d'engrenages (122H, 122L).

2. Transmission selon la revendication 1, dans laquelle la tôle-chicane (50A ; 50B ; 50B' ; 50C ; 50C') comprend en outre des parties de surface latérale (52) s'étendant vers le haut depuis les deux extrémités supérieures de la partie de surface périphérique (51) de manière à prendre une forme en U telle que visualisée depuis l'axe de rotation du corps de rotation.

3. Transmission selon la revendication 1 ou 2, comprenant en outre une tôle de support de palier (210, 220) montée dans le carter (10),
dans laquelle la tôle-chicane (50A ; 50B ; 50B' ; 50C ; 50C') comprend en outre une attache (53, 54) reliée au support de palier (210, 220), et
dans laquelle la tôle-chicane (50A ; 50B ; 50B' ; 50C ; 50C') sépare l'espace avoisinant (11) et l'espace principal (12) de manière étanche au liquide en coopération avec la tôle de support de palier (210, 220).

4. Transmission selon la revendication 1 ou 2,
dans laquelle la tôle-chicane (50A ; 50B ; 50B' ; 50C ; 50C') comprend en outre une paire de faces terminales (53, 54) s'étendant dans une direction radiale depuis les deux extrémités dans la direction de l'axe central de la surface périphérique de manière à couvrir au moins une zone comprenant la partie terminale la plus inférieure des deux extrémités dans la direction de l'axe de rotation du corps de rotation, et
dans laquelle l'espace avoisinant (11) et l'espace principal (12) sont séparés de manière étanche au liquide par la surface périphérique et la paire de faces terminales (53, 54).

5. Transmission selon la revendication 4, dans laquelle un entrefer entre la paire de faces terminales et les faces terminales opposées du corps de rotation est de 3 mm ou inférieur.

6. Transmission selon l'une quelconque des revendications 1 à 4, dans laquelle un entrefer dans la direction radiale entre la partie de surface périphérique (51) et la surface périphérique extérieure du corps de rotation est de 3 mm ou inférieur.
